(19)

Europäisches
Patentamt

European
Patent Office

Office européen
des brevets

(11) **EP 2 541 939 A1**

(12) **EUROPEAN PATENT APPLICATION**
published in accordance with Art. 153(4) EPC

(43) Date of publication:
**02.01.2013 Bulletin 2013/01**

(21) Application number: **11747261.3**

(22) Date of filing: **18.02.2011**

(51) Int Cl.:
*H04N 7/32* (2006.01)      *H04N 13/02* (2006.01)

(86) International application number:
**PCT/JP2011/053516**

(87) International publication number:
**WO 2011/105297 (01.09.2011 Gazette 2011/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.02.2010 JP 2010037434**

(71) Applicant: **Nippon Telegraph And Telephone
Corporation
Tokyo 100-8116 (JP)**

(72) Inventors:
• **SHIMIZU, Shinya
Musashino-shi
Tokyo 180-8585 (JP)**
• **KIMATA, Hideaki
Musashino-shi
Tokyo 180-8585 (JP)**
• **MATSUURA, Norihiko
Musashino-shi
Tokyo 180-8585 (JP)**

(74) Representative: **Ilgart, Jean-Christophe
BREVALEX
95 rue d'Amsterdam
75378 Paris Cedex 8 (FR)**

(54) **MOTION VECTOR ESTIMATION METHOD, MULTIVIEW IMAGE ENCODING METHOD, MULTIVIEW IMAGE DECODING METHOD, MOTION VECTOR ESTIMATION DEVICE, MULTIVIEW IMAGE ENCODING DEVICE, MULTIVIEW IMAGE DECODING DEVICE, MOTION VECTOR ESTIMATION PROGRAM, MULTIVIEW IMAGE ENCODING PROGRAM AND MULTIVIEW IMAGE DECODING PROGRAM**

(57) Efficient multiview video encoding is realized even in a situation in which a processing picture cannot be obtained, by accurately estimating a motion vector and simultaneously using an inter-camera correlation and a temporal correlation in prediction of a video signal. A view synthesized picture at a time when a processing picture has been taken is generated from a reference camera video that has been taken by a camera different from a processing camera that has taken the processing picture included in a multiview video based on the same setting as that of the processing camera. A motion vector is estimated by searching for a corresponding region in a reference picture taken by the processing camera using a picture signal on the view synthesized picture corresponding to a processing region on the processing picture without using the processing picture.

FIG. 1

EP 2 541 939 A1

**Description**

TECHNICAL FIELD

The present invention relates to a motion vector estimation method, a multiview video encoding method, a multiview video decoding method, a motion vector estimation apparatus, a multiview video encoding apparatus, a multiview video decoding apparatus, a motion vector estimation program, a multiview video encoding program, and a multiview video decoding program.
Priority is claimed on Japanese Patent Application No. 2010-037434, filed February 23, 2010, the content of which is incorporated herein by reference.

BACKGROUND ART

Multiview moving pictures (multiview video) are a group of moving pictures obtained by photographing the same object and background using a plurality of cameras. In typical moving picture encoding, efficient encoding is realized using motion compensated prediction that utilizes a high correlation between frames at different times in moving pictures. The motion compensated prediction is a technique adopted in recent international standards of moving picture encoding schemes represented by H.264. That is, the motion compensated prediction is a method for generating a picture by compensating for the motion of an object between an encoding target frame and an already encoded reference frame, calculating the inter-frame difference between the generated picture and the encoding target frame, and encoding only the difference signal.

In multiview moving picture encoding, a high correlation exists not only between frames at different times but also between frames at different views. Thus, a technique called disparity compensated prediction is used in which the inter-frame difference between an encoding target frame and a picture (frame) generated by compensating for disparity between views, rather than a motion, is calculated and only the difference signal is encoded. The disparity compensated prediction is adopted in the international standard as H.264 Annex. H (regarding the details of H.264, see, for example, Non-Patent Document 1).

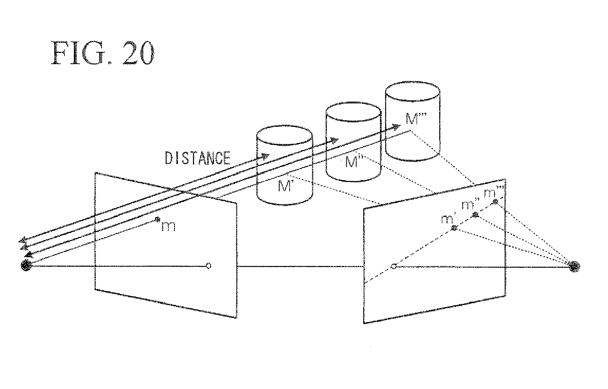

The disparity used herein is the difference between positions at which an object is projected on picture planes of cameras arranged in different positions. In the disparity compensated prediction, encoding is performed by representing this as a two-dimensional vector. Because the disparity is information generated depending upon cameras and the position (depth) of the object relative to the cameras as illustrated in FIG. 20, there is a scheme using this principle called view synthesis prediction (view interpolation prediction).

View synthesis prediction (view interpolation prediction) is a scheme that uses, as a predicted picture, a picture obtained by synthesizing (interpolating) a frame at another view which is subjected to an encoding or decoding process using part of a multiview video which has already been processed and for which a decoding result is obtained, based on three-dimensional positional relationship between cameras and an object (for example, see Non-Patent Document 2).

Usually, in order to represent a three-dimensional position of an object, a depth map (also called a range picture, a disparity picture, or a disparity map) is used which represents the distances (depth) from cameras to an object for each pixel. In addition to the depth map, polygon information of the object or voxel information of the space of the object can also be used.

It is to be noted that methods for acquiring a depth map are roughly classified into a method for generating a depth map by measurement using infrared pulses or the like and a method for generating a depth map by estimating a depth from points on a multiview video at which the same object is photographed using a triangulation principle. In view synthesis prediction, it is not a serious problem which one of the depth maps obtained by these methods is used. In addition, it is also not a serious problem where estimation is performed as long as the depth map can be obtained.

However, in general, when predictive encoding is performed, if a depth map used at an encoding side is not equal to a depth map used at a decoding side, encoding distortion called drift occurs. Thus, the depth map used at the encoding side is transmitted to the decoding side, or a method in which the encoding side and the decoding side estimate depth maps using completely the same data and technique is used.

Prior Art Documents

Non-Patent Documents

Non-Patent Document 1: Rec. ITU-T H.264 "Advanced video coding for generic audiovisual services", March 2009.
Non-Patent Document 2: S. Shimizu, M. Kitahara, H. Kimata, K. Kamikura, and Y. Yashima, "View Scalable Multiview Video Coding Using 3-D Warping with Depth Map", IEEE Transactions on Circuits and System for Video Technology, Vol. 17, No. 11, pp. 1485-1495, November, 2007.

## SUMMARY OF THE INVENTION

### Problems to be solved by the Invention

In the above-described conventional art, redundancy in video signals between cameras can be eliminated by using the disparity compensated prediction or view synthesis prediction. Thus, it is possible to perform compression encoding of a multiview video with high efficiency as compared to the case in which videos taken by respective cameras are independently encoded.

However, both an inter-camera correlation and a temporal correlation simultaneously exist in a multiview video. Thus, when only the disparity compensated prediction or the view synthesis prediction is used, temporal redundancy cannot be eliminated by using the temporal correlation, and thus it is impossible to realize efficient encoding.

Non-Patent Document 1 attempts to use both an inter-camera correlation and a temporal correlation by introducing adaptive selection between motion compensated prediction and disparity compensated prediction for each block. With this method, it is possible to realize efficient encoding as compared to the case in which only either one of the correlations is used.

However, selection of either one of them for each block merely reduces a greater amount of redundancy by using a stronger correlation for each block, and it is impossible to reduce redundancy simultaneously existing between cameras and between frames taken at different times.

As a solution for this problem, it is possible to easily infer a method using the weighted average between a predicted picture generated by a technique using a temporal correlation such as motion compensated prediction and a predicted picture generated by a technique using an inter-camera correlation such as disparity compensated prediction or view synthesis prediction. With this technique, an advantageous effect that the encoding efficiency is improved to a certain extent can be obtained.

However, generation of the predicted picture using the weighted average merely distributes rates at which the correlations are used between the temporal correlation and the inter-camera correlation. That is, because it merely uses either one of the correlations more flexibly, rather than simultaneously using the two correlations, the simultaneously existing redundancy cannot be reduced.

The present invention has been made in view of such circumstances, and an object thereof is to provide a motion vector estimation method, a multiview video encoding method, a multiview video decoding method, a motion vector estimation apparatus, a multiview video encoding apparatus, a multiview video decoding apparatus, a motion vector estimation program, a multiview video encoding program, and a multiview video decoding program which can estimate a motion vector accurately even in a situation in which a processing picture cannot be obtained and which can realize efficient multiview video encoding using two correlations simultaneously by utilizing a temporal correlation in prediction for a video signal.

### Means for Solving the Problems

In order to solve the above-described problems, a first aspect of the present invention is a motion vector estimation method including: a view synthesized picture generation step of generating, from a reference camera video taken by a camera different from a processing camera that has taken a processing picture included in a multiview video, a view synthesized picture at a time when the processing picture has been taken based on the same setting as that of the processing camera; and a corresponding region estimation step of estimating a motion vector by searching for a corresponding region in a reference picture taken by the processing camera using a picture signal on the view synthesized picture corresponding to a processing region on the processing picture without using the processing picture.

In the first aspect of the present invention, a degree of reliability setting step of setting a degree of reliability indicating certainty of the view synthesized picture for each pixel of the view synthesized picture may be further included, and in the corresponding region estimation step, a weight may be assigned to a matching cost when the corresponding region is searched for based on the degree of reliability.

In addition, in order to solve the above-described problems, a second aspect of the present invention is a multiview video encoding method for performing predictive encoding of a multiview video, and the method includes: a view synthesized picture generation step of generating, from an already encoded reference view frame taken simultaneously with an encoding target frame at a reference view different from an encoding target view of the multiview video, a view synthesized picture at the encoding target view; a motion vector estimation step of estimating a motion vector by searching for a corresponding region on an already encoded reference frame at the encoding target view for each unit block for encoding of the view synthesized picture; a motion compensated prediction picture generation step of generating a motion compensated prediction picture for the encoding target frame using the estimated motion vector and the reference frame; and a residual encoding step of encoding a difference signal between the encoding target frame and the motion compensated prediction picture.

In the second aspect of the present invention, a degree of reliability setting step of setting a degree of reliability indicating certainty of the view synthesized picture for each pixel of the view synthesized picture may be further included, and in the motion vector estimation step, a weight may be assigned to a matching cost of each pixel when the corresponding region is searched for based on the degree of reliability.

In the second aspect of the present invention, a motion search step of generating an optimum motion vector by searching for the corresponding region between the reference frame and each unit block for encoding of the encoding target frame; and a difference vector encoding step of encoding a difference vector between the motion vector and the optimum motion vector may be further included, and in the motion compensated prediction picture generation step, the motion compensated prediction picture may be generated using the optimum motion vector and the reference frame.

In the second aspect of the present invention, a prediction vector generation step of generating a prediction vector using the motion vector and a group of optimum motion vectors used in regions neighboring an encoding target region may be further included, and in the difference vector encoding step, a difference vector between the prediction vector and the optimum motion vector may be encoded.

In addition, in order to solve the above-described problems, a third aspect of the present invention is a multiview video decoding method for decoding a video for a view of a multiview video from encoded data, and the method includes: a view synthesized picture generation step of generating, from a reference view frame taken simultaneously with a decoding target frame at a reference view different from a decoding target view, a view synthesized picture at the decoding target view; a motion vector estimation step of estimating a motion vector by searching for a corresponding region on an already decoded reference frame at the decoding target view for each unit block for decoding of the view synthesized picture; a motion compensated prediction picture generation step of generating a motion compensated prediction picture for the decoding target frame using the estimated motion vector and the reference frame; and a picture decoding step of decoding the decoding target frame that has been subjected to predictive encoding from the encoded data using the motion compensated prediction picture as a prediction signal.

In the third aspect of the present invention, a degree of reliability setting step of setting a degree of reliability indicating certainty of the view synthesized picture for each pixel of the view synthesized picture may be further included, and in the motion vector estimation step, a weight may be assigned to a matching cost of each pixel when the corresponding region is searched for based on the degree of reliability.

In the third aspect of the present invention, a vector decoding step of decoding an optimum motion vector that has been subjected to predictive encoding from the encoded data using the motion vector as a prediction vector may be further included, and in the motion compensated prediction picture generation step, the motion compensated prediction picture may be generated using the optimum motion vector and the reference frame.

In the third aspect of the present invention, a prediction vector generation step of generating an estimated prediction vector using the motion vector and a group of optimum motion vectors used in regions neighboring a decoding target region may be further included, and in the vector decoding step, the optimum motion vector may be decoded using the estimated prediction vector as the prediction vector.

In addition, in order to solve the above-described problems, a fourth aspect of the present invention is a motion vector estimation apparatus including: a view synthesized picture generation means for generating, from a reference camera video taken by a camera different from a processing camera that has taken a processing picture included in a multiview video, a view synthesized picture at a time when the processing picture has been taken based on the same setting as that of the processing camera; and a corresponding region estimation means for estimating a motion vector by searching for a corresponding region in a reference picture taken by the processing camera using a picture signal on the view synthesized picture corresponding to a processing region on the processing picture without using the processing picture.

In the fourth aspect of the present invention, a degree of reliability setting means for setting a degree of reliability indicating certainty of the view synthesized picture for each pixel of the view synthesized picture may be further included, and the corresponding region estimation means may assign a weight to a matching cost when the corresponding region is searched for based on the degree of reliability.

In addition, in order to solve the above-described problems, a fifth aspect of the present invention is a multiview video encoding apparatus for performing predictive encoding of a multiview video, and the apparatus includes: a view synthesized picture generation means for generating, from an already encoded reference view frame taken simultaneously with an encoding target frame at a reference view different from an encoding target view of the multiview video, a view synthesized picture at the encoding target view; a motion vector estimation means for estimating a motion vector by searching for a corresponding region on an already encoded reference frame at the encoding target view for each unit block for encoding of the view synthesized picture; a motion compensated prediction picture generation means for generating a motion compensated prediction picture for the encoding target frame using the estimated motion vector and the reference frame; and a residual encoding means for encoding a difference signal between the encoding target frame and the motion compensated prediction picture.

In the fifth aspect of the present invention, a degree of reliability setting means for setting a degree of reliability indicating certainty of the view synthesized picture for each pixel of the view synthesized picture may be further included, and the motion vector estimation means may assign a weight to a matching cost of each pixel when the corresponding region is searched for based on the degree of reliability.

In addition, in order to solve the above-described problems, a sixth aspect of the present invention is a multiview video decoding apparatus for decoding a video for a view of a multiview video from encoded data, and the apparatus includes: a view synthesized picture generation means for generating, from a reference view frame taken simultaneously with a decoding target frame at a reference view different from a decoding target view, a view synthesized picture at the decoding target view; a motion vector estimation means for estimating a motion vector by searching for a corresponding region on an already decoded reference frame at the decoding target view for each unit block for decoding of the view synthesized picture; a motion compensated prediction picture generation means for generating a motion compensated prediction picture for the decoding target frame using the estimated motion vector and the reference frame; and a picture decoding means for decoding the decoding target frame that has been subjected to predictive encoding from the encoded data using the motion compensated prediction picture as a prediction signal.

In the sixth aspect of the present invention, a degree of reliability setting means for setting a degree of reliability indicating certainty of the view synthesized picture for each pixel of the view synthesized picture may be further included, and the motion vector estimation means may assign a weight to a matching cost of each pixel when the corresponding region is searched for based on the degree of reliability.

In addition, in order to solve the above-described problems, a seventh aspect of the present invention is a motion vector estimation program for causing a computer of a motion vector estimation apparatus to execute: a view synthesized picture generation function of generating, from a reference camera video taken by a camera different from a processing camera that has taken a processing picture included in a multiview video, a view synthesized picture at a time when the processing picture has been taken based on the same setting as that of the processing camera; and a corresponding region estimation function of estimating a motion vector by searching for a corresponding region in a reference picture taken by the processing camera using a picture signal on the view synthesized picture corresponding to a processing region on the processing picture without using the processing picture.

In addition, in order to solve the above-described problems, an eighth aspect of the present invention is a multiview video encoding program for causing a computer of a multiview video encoding apparatus for performing predictive encoding of a multiview video to execute: a view synthesized picture generation function of generating, from an already encoded reference view frame taken simultaneously with an encoding target frame at a reference view different from an encoding target view of the multiview video, a view synthesized picture at the encoding target view; a motion vector estimation function of estimating a motion vector by searching for a corresponding region on an already encoded reference frame at the encoding target view for each unit block for encoding of the view synthesized picture; a motion compensated prediction picture generation function of generating a motion compensated prediction picture for the encoding target frame using the estimated motion vector and the reference frame; and a residual encoding function of encoding a difference signal between the encoding target frame and the motion compensated prediction picture.

In addition, in order to solve the above-described problems, a ninth aspect of the present invention is a multiview video decoding program for causing a computer of a multiview video decoding apparatus for decoding a video for a view of a multiview video from encoded data to execute: a view synthesized picture generation function of generating, from a reference view frame taken simultaneously with a decoding target frame at a reference view different from a decoding target view, a view synthesized picture at the decoding target view; a motion vector estimation function of estimating a motion vector by searching for a corresponding region on an already decoded reference frame at the decoding target view for each unit block for decoding of the view synthesized picture; a motion compensated prediction picture generation function of generating a motion compensated prediction picture for the decoding target frame using the estimated motion vector and the reference frame; and a picture decoding function of decoding the decoding target frame that has been subjected to predictive encoding from the encoded data using the motion compensated prediction picture as a prediction signal.

Advantageous Effects of the Invention

The present invention can estimate a motion vector accurately even in a situation in which a processing picture cannot be obtained, and can realize efficient multiview video encoding using two correlations (i.e., an inter-camera correlation and a temporal correlation) simultaneously by utilizing the temporal correlation in prediction for a video signal.

BRIEF DESCRIPTION OF THE DRAWINGS

FIG. 1 is a block diagram illustrating a configuration of a multiview video encoding apparatus in a first embodiment of the present invention.
FIG. 2 is a flowchart describing an operation of the multiview video encoding apparatus in the first embodiment.
FIG. 3 is a block diagram illustrating a configuration of a multiview video encoding apparatus in a second embodiment of the present invention.
FIG. 4 is a flowchart describing an operation of the multiview video encoding apparatus in the second embodiment.
FIG. 5 is a block diagram illustrating a configuration of a multiview video decoding apparatus in a third embodiment of the present invention.
FIG. 6 is a flowchart describing an operation of the multiview video decoding apparatus in the third embodiment.
FIG. 7 is a block diagram illustrating a configuration of a multiview video decoding apparatus in a fourth embodiment of the present invention.
FIG. 8 is a flowchart describing an operation of the multiview video decoding apparatus in the fourth embodiment.
FIG. 9 is a block diagram illustrating a configuration of a motion vector estimation apparatus in a fifth embodiment of the present invention.
FIG. 10 is a flowchart describing an operation of the motion vector estimation apparatus in the fifth embodiment.
FIG. 11 is a block diagram illustrating another configuration example of the motion vector estimation apparatus in the fifth embodiment.
FIG. 12 is a block diagram illustrating a configuration of a multiview video encoding apparatus in a sixth embodiment of the present invention.
FIG. 13 is a flowchart describing an operation of the multiview video encoding apparatus in the sixth embodiment.
FIG. 14 is a block diagram illustrating a configuration of a multiview video encoding apparatus in a seventh embodiment of the present invention.
FIG. 15 is a flowchart describing an operation of the multiview video encoding apparatus in the seventh embodiment.
FIG. 16 is a block diagram illustrating a configuration of a multiview video decoding apparatus in an eighth embodiment of the present invention.
FIG. 17 is a flowchart describing an operation of the multiview video decoding apparatus in the eighth embodiment.
FIG. 18 is a block diagram illustrating a configuration of a multiview video decoding apparatus in a ninth embodiment of the present invention.
FIG. 19 is a flowchart describing an operation of the multiview video decoding apparatus in the ninth embodiment.
FIG. 20 is a conceptual diagram illustrating a relationship between distances (depths) from cameras to objects and disparity.

MODES FOR CARRYING OUT THE INVENTION

Hereinafter, embodiments of the present invention will be described with reference to the drawings.

In the conventional art, motion compensated prediction is realized by obtaining a corresponding region on a reference picture using a picture signal of an input encoding target picture. In this case, because the input picture cannot be obtained at a decoding side, it is necessary to encode motion vector information representing the corresponding region. In the embodiments of the present invention, a synthesized picture corresponding to an encoding target picture is generated using a video taken by another camera (step Sa2 described later), and a corresponding region on a reference picture is obtained using a picture signal of the synthesized picture (step Sa5 described later). Because it is possible to generate the same synthesized picture at the decoding side, a motion vector is obtained by performing the same search at the decoding side as at an encoding side. As a result, the embodiments of the present invention provide an advantageous effect in that it is not necessary to encode the motion vector despite motion compensated prediction is performed, so that it is possible to reduce a corresponding bitrate.

It is to be noted that in the following description, information (a coordinate value, an index capable of being associated with the coordinate value, a region, and an index capable of being associated with the region) capable of specifying a position, which is inserted between symbols [ ], is appended to a video (frame), thereby representing a pixel at the position or a video signal corresponding to the region.

A. First Embodiment

First, a first embodiment of the present invention will be described.

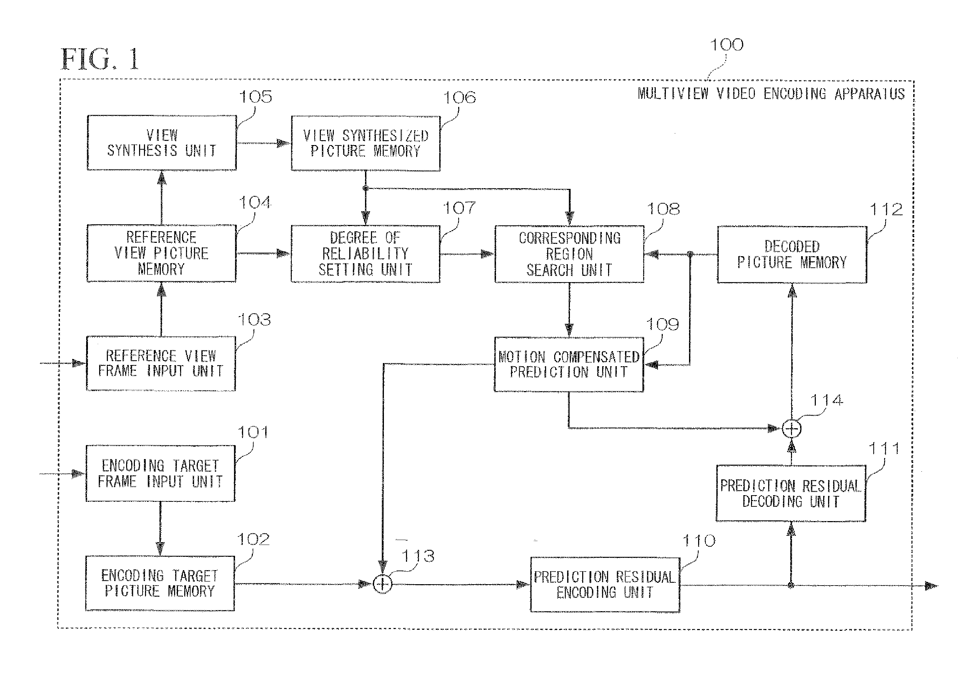

FIG. 1 is a block diagram illustrating a configuration of a multiview video encoding apparatus in the first embodiment.

As illustrated in FIG. 1, the multiview video encoding apparatus 100 is provided with an encoding target frame input unit 101, an encoding target picture memory 102, a reference view frame input unit 103, a reference view picture memory 104, a view synthesis unit 105, a view synthesized picture memory 106, a degree of reliability setting unit 107, a corresponding region search unit 108, a motion compensated prediction unit 109, a prediction residual encoding unit 110, a prediction residual decoding unit 111, a decoded picture memory 112, a prediction residual calculation unit 113, and a decoded picture calculation unit 114.

The encoding target frame input unit 101 inputs a video frame (encoding target frame) serving as an encoding target. The encoding target picture memory 102 stores the input encoding target frame. The reference view frame input unit 103 inputs a video frame (reference view frame) for a view (reference view) different from that of the encoding target frame. The reference view picture memory 104 stores the input reference view frame. The view synthesis unit 105 generates a view synthesized picture corresponding to the encoding target frame using the reference view frame.

The view synthesized picture memory 106 stores the generated view synthesized picture. The degree of reliability setting unit 107 sets a degree of reliability for each pixel of the generated view synthesized picture. The corresponding region search unit 108 searches for a motion vector representing a corresponding block in an already encoded frame which serves as a reference frame of motion compensated prediction and has been taken at the same view as the encoding target frame, using the degrees of reliability for each unit block for encoding of the view synthesized picture. That is, by assigning a weight based on the degree of reliability to a matching cost when the corresponding region is searched for, an accurately synthesized pixel is regarded as important and highly accurate motion vector estimation is realized, without being affected by an error in view synthesis.

The motion compensated prediction unit 109 generates a motion compensated prediction picture using the reference frame based on the determined corresponding block. The prediction residual calculation unit 113 calculates the difference (prediction residual signal) between the encoding target frame and the motion compensated prediction picture. The prediction residual encoding unit 110 encodes the prediction residual signal. The prediction residual decoding unit 111 decodes the prediction residual signal from encoded data. The decoded picture calculation unit 114 calculates a decoded picture of the encoding target frame by summing the decoded prediction residual signal and the motion compensated prediction picture. The decoded picture memory 112 stores the decoded picture.

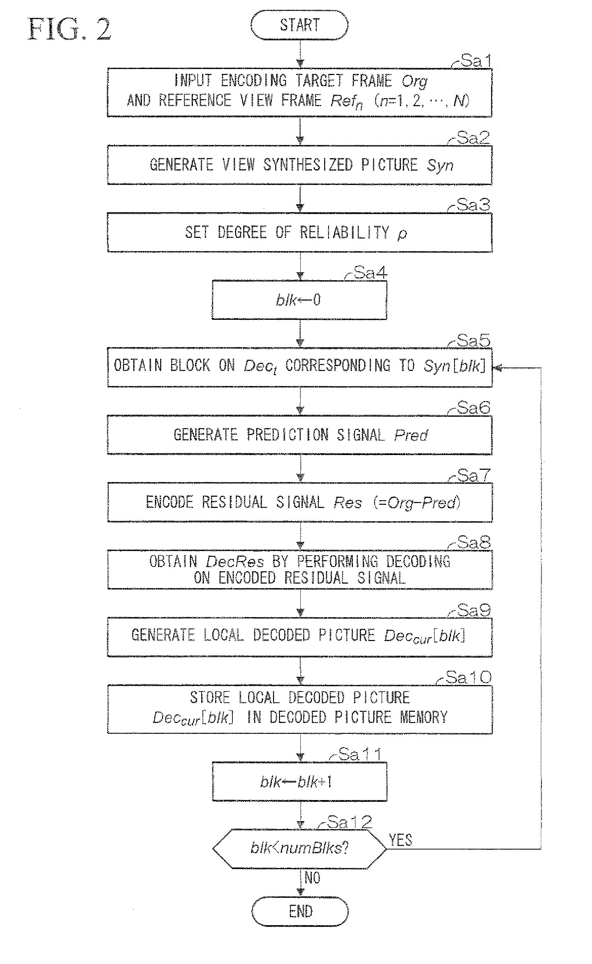

FIG. 2 is a flowchart describing an operation of the multiview video encoding apparatus 100 in the first embodiment. A process executed by the multiview video encoding apparatus 100 of the first embodiment will be described in detail based on this flowchart.

First, an encoding target frame $Org$ is input by the encoding target frame input unit 101 and stored in the encoding target picture memory 102 (step Sa1). In addition, a reference view frame $Ref_n$ ($n$=1, 2, ..., $N$) taken at a reference view simultaneously with the encoding target frame $Org$ is input by the reference view frame input unit 103, and stored in the reference view picture memory 104 (step Sa1). Here, the input reference view frame is assumed to be obtained by decoding an already encoded picture. This is to prevent encoding noise such as drift from being generated, by using the same information as information that can be obtained at a decoding apparatus. However, when the generation of encoding noise is allowed, an original picture before encoding may be input. It is to be noted that $n$ is an index indicating a reference view and $N$ is the number of available reference views.

Next, the view synthesis unit 105 synthesizes a picture taken at the same view simultaneously with the encoding target frame from information of the reference view frame, and stores the generated view synthesized picture $Syn$ in the view synthesized picture memory 106 (step Sa2). Any method can be used as a method for generating the view synthesized picture. For example, if depth information for the reference view frame is given in addition to video information of the reference view frame, it is possible to use a technique disclosed in Non-Patent Document 2, Non-Patent Document 3 (Y. Mori, N. Fukushima, T. Fujii, and M. Tanimoto, "View Generation with 3D Warping Using Depth Information for FTV", Proceedings of 3DTV-CON2008, pp. 229-232, May 2008), or the like.

In addition, if depth information for the encoding target frame has been obtained, it is also possible to use a technique disclosed in Non-Patent Document 4 (S. Yea and A. Vetro, "View Synthesis Prediction for Rate-Overhead Reduction in FTV", Proceedings of 3DTV-CON2008, pp. 145-148, May 2008) or the like.

If no depth information is obtained, it is possible to generate a view synthesized picture by applying the above-described technique after creating depth information for the reference view frame or the encoding target frame using a technique called a stereo method or a depth estimation method disclosed in Non-Patent Document 5 (J. Sun, N. Zheng, and H. Shum, "Stereo Matching Using Belief Propagation", IEEE Transactions on Pattern Analysis and Machine Intelligence, Vol. 25, No. 7, pp. 787-800, July 2003) or the like (Non-Patent Document 6: S. Shimizu, Y. Tonomura, H. Kimata, and Y. Ohtani, "Improved View Interpolation Prediction for Side Information in Multiview Distributed Video Coding", Proceedings of ICDSC2009, August 2009).

Also, there is a method for directly generating a view synthesized picture from the reference view frame without explicitly generating depth information (Non-Patent Document 7: K. Yamamoto, M. Kitahara, H. Kimata, T. Yendo, T. Fujii, M. Tanimoto, S. Shimizu, K. Kamikura, and Y. Yashima, "Multiview Video Coding Using View Interpolation and Color Correction", IEEE Transactions on Circuits and System for Video Technology, Vol. 17, No. 11, pp. 1436-1449, November, 2007).

It is to be noted that when these techniques are used, camera parameters that represent a positional relationship between cameras and projection processes of the cameras are basically required. These camera parameters can also be estimated from the reference view frame. It is to be noted that if the decoding side does not estimate the depth information, the camera parameters, and so on, it is necessary to encode and transmit these pieces of additional information used in the encoding apparatus.

Next, the degree of reliability setting unit 107 generates a degree of reliability $\rho$ indicating the certainty that synthesis for each pixel of the view synthesized picture was able to be realized (step Sa3). In the first embodiment, the degree of reliability $\rho$ is assumed to be a real number of 0 to 1; however, the degree of reliability may be represented in any way as long as it is greater than or equal to 0 and the larger its value is, the higher the degree of reliability is. For example, the degree of reliability may be represented as an 8-bit integer that is greater than or equal to 1.

As the degree of reliability p, any degree of reliability may be used as long as it can indicate how accurately synthesis has been performed as described above. For example, the simplest method involves using the variance value of pixel values of pixels on a reference view frame corresponding to pixels of a view synthesized picture. The closer the pixel values of the corresponding pixels, the higher the accuracy that view synthesis has been performed because the same object was able to be identified, and thus the smaller the variance is, the higher the degree of reliability is. That is, the degree of reliability is represented by the reciprocal of the variance. When a pixel of each reference view frame used to synthesize a view synthesized picture $Syn[p]$ is denoted by $Ref_n[p_n]$, it is possible to represent the degree of reliability using the following Equation (1) or (2).

[Formula 1]

$$\rho[p] = \frac{1}{\max(\operatorname{var}1(p),1)} \quad \cdots\cdots\cdots\cdots (1)$$

[Formula 2]

$$\rho[p] = \frac{1}{\max(\operatorname{var}2(p),1)} \quad \cdots\cdots\cdots\cdots (2)$$

Because the minimum value of variance is 0, it is necessary to define the degree of reliability using a function *max.* It is to be noted that *max* is a function that returns the maximum value for a given set. In addition, the other functions are represented by the following Equations (3).

[Formula 3]

$$\mathrm{var}\,1(p) = \frac{\sum_n \left| \mathrm{Ref}_n[p_n] - \mathrm{ave}(p) \right|}{N},$$

$$\mathrm{var}\,2(p) = \frac{\sum_n \left( \mathrm{Ref}_n[p_n] - \mathrm{ave}(p) \right)^2}{N},$$

$$ave(p) = \frac{\sum_n \mathrm{Ref}_n[p_n]}{N} \qquad \cdots\cdots\cdots\cdots (3)$$

In addition to the variance, there is also a method using the difference *diff(p)* between the maximum value and the minimum value of pixels of a corresponding reference view frame represented by the following Equation (4). In addition, the degree of reliability may be defined using an exponential function as shown in the following Equation (4)', instead of a reciprocal of a fraction. It is to be noted that a function *f* may be any of *var1, var2,* and *diff* described above. In this case, it is possible to define the degree of reliability even when 0 is included in the range of the function *f*.
[Formula 4]

$$\rho[p] = \frac{1}{\max(diff(p),1)} \qquad \cdots\cdots\cdots\cdots (4)$$

$$\rho[p] = \frac{1}{e^{f(p)}} \qquad \cdots\cdots\cdots\cdots (4)\;'$$

Although these methods are simple, the optimum degree of reliability is not constantly obtained because generation of occlusion is not considered. Accordingly, in consideration of the generation of occlusion, a reference view frame may be clustered based on pixel values of corresponding pixels, and a variance value or the difference between a maximum value and a minimum value may be calculated and used for the pixel values of the corresponding pixels of the reference view frame that belong to the largest cluster.
Furthermore, as another method, the degree of reliability may be defined using a probability value corresponding to an error amount of each pixel obtained by *diff* of Equation (4) described above or the like by assuming that errors between corresponding points of views follow a normal distribution or a Laplace distribution and using the average value or the variance value of the distribution as a parameter. In this case, a model of the distribution, its average value, and its variance value that are pre-defined may be used, or information of the used model may be encoded and transmitted. In general, if an object has uniform diffuse reflection, the average value of the distribution can be theoretically considered to be 0, and thus the model may be simplified.
In addition, assuming that an error amount of a pixel value of a corresponding pixel is minimized in the vicinity of a depth at which a corresponding point is obtained when a view synthesized picture is generated, it is possible to use a method for estimating an error distribution model from a change in the error amount when a depth is minutely varied and for defining the degree of reliability using the error distribution model itself or a value based on the error distribution model and the pixel value of the corresponding pixel on a reference view frame when the view synthesized picture is generated.

As a definition using only the error distribution model, there is a method for defining the degree of reliability as a probability that an error falls within a given range when the probability that the error is generated follows the error distribution. As a definition using the error distribution model and the pixel value of the corresponding pixel on the reference view frame when the view synthesized picture is generated, there is a method for assuming that a probability that an error is generated follows an estimated error distribution and for defining the degree of reliability as a probability that a situation represented by the pixel value of the corresponding pixel on the reference view frame when the view synthesized picture is generated occurs.

Furthermore, as still another method, a probability value for a disparity (depth) obtained by using a technique (Non-Patent Document 5 described above) called belief propagation when a disparity (depth) that is necessary to perform view synthesis is estimated may be used as the degree of reliability. In addition to the belief propagation, in the case of a depth estimation algorithm which internally calculates the certainty of a solution for each pixel of the view synthesized picture, it is possible to use its information as the degree of reliability.

If a corresponding point search, a stereo method, or depth estimation is performed when the view synthesized picture is generated, part of a process of obtaining corresponding point information or depth information may be the same as part of calculation of the degrees of reliability. In such cases, it is possible to reduce the amount of computation by simultaneously performing the generation of the view synthesized picture and the calculation of the degrees of reliability.

When the calculation of the degrees of reliability p ends, the encoding target frame is divided into blocks and a video signal of the encoding target frame is encoded while a corresponding point search and generation of a predicted picture is performed for each region (steps Sa4 to Sa12). That is, when an index of an encoding target block is denoted by *blk* and the total number of encoding target blocks is denoted by *numBlks*, after *blk* is initialized to 0 (step Sa4), the following process (steps Sa5 to Sa10) is iterated until *blk* reaches *numBlks* (step Sa12) while incrementing *blk* by 1 (step Sa11).

It is to be noted that if it is possible to perform the generation of the view synthesized picture and the calculation of the degree of reliability $\rho$ described above for each encoding target block, these processes can also be performed as part of a process iterated for each encoding target block. For example, this includes the case in which depth information for the encoding target block is given.

In the process iterated for each encoding target block, first, the corresponding region search unit 108 finds a corresponding block on a reference frame corresponding to a block *blk* using the view synthesized picture (step Sa5). Here, the reference frame is a local decoded picture obtained by performing decoding on data that has already been encoded. Data of the local decoded picture is data stored in the decoded picture memory 112.

It is to be noted that the local decoded picture is used to prevent encoding distortion called drift from being generated, by using the same data as data capable of being acquired at the same timing at the decoding side. If the generation of the encoding distortion is allowed, it is possible to use an input frame encoded before the encoding target frame, instead of the local decoded picture. It is to be noted that the first embodiment uses a picture taken by the same camera as that for the encoding target frame at a time different from that of the encoding target frame. However, any frame taken by a camera different from that for the encoding target frame can be used as long as it is a frame processed before the encoding target frame.

A corresponding block obtaining process is a process of obtaining a corresponding block that maximizes a goodness of fit or minimizes a degree of divergence on a local decoded picture stored in the decoded picture memory 112 by using the view synthesized picture *Syn[blk]* as a template. In the first embodiment, a matching cost indicating a degree of divergence is used. The following Equations (5) and (6) are specific examples of the matching cost indicating the degree of divergence.

[Formula 5]

$$Cost(vec,t) = \sum_{p \in blk} \rho[p] \cdot |Syn[p] - Dec_t[p + vec]| \qquad \cdots\cdots\cdots\cdots (5)$$

[Formula 6]

$$Cost(vec,t) = \sum_{p \in blk} \rho[p] \cdot (Syn[p] - Dec_t[p+vec])^2 \qquad \cdots\cdots\cdots (6)$$

Here, *vec* is a vector between corresponding blocks, and *t* is an index value indicating one of local decoded pictures *Dec* stored in the decoded picture memory 112. In addition to these, there is a method using a value obtained by transforming the difference value between the view synthesized picture and the local decoded picture using a discrete cosine transform (DCT), an Hadamard transform, or the like. When the transform is denoted by a matrix *A*, it can be represented by the following Equation (7) or (8). It is to be noted that $\|X\|$ denotes a norm of *X*.
[Formula 7]

$$Cost(vec,t) = \left\| \rho[blk] \cdot A \cdot (Syn[blk] - Dec_t[blk+vec]) \right\| \qquad \cdots\cdots (7)$$

[Formula 8]

$$Cost(vec,t) = \left\| \rho[blk] \cdot A \cdot (|Syn[blk] - Dec_t[blk+vec]|) \right\| \qquad \cdots\cdots (8)$$

That is, a pair of (*best_vec, best_t*) represented by the following Equation (9) is obtained by these processes of obtaining a block that minimizes the matching cost. Here, *argmin* denotes a process of obtaining a parameter that minimizes a given function. A set of parameters to be derived is a set that is shown below *argmin*.
[Formula 9]

$$(best\_vec, best\_t) = \arg\min_{vec,t}(Cost(vec,t)) \qquad \cdots\cdots (9)$$

Any method can be used as a method for determining the number of frames to be searched, a search range, the search order, and termination of a search. However, it is necessary to use the same ones as those at the decoding side so as to accurately perform decoding. It is to be noted that the search range and the termination method significantly affects a computation cost. As a method for providing high matching accuracy using a smaller search range, there is a method for appropriately setting a search center. As an example, there is a method for setting, as a search center, a corresponding point represented by a motion vector used in a corresponding region on a reference view frame.

In addition, as a method for reducing a computation cost required for a search at the decoding side, there is a method for limiting a target frame to be searched. A method for determining a target frame to be searched may be predefined. For example, this includes a method for determining a frame for which encoding has most recently ended as a search target. In addition, as another method, there is a method for encoding information indicating which frame is a target and for notifying the decoding side of the encoded information. In this case, it is necessary for the decoding side to have a mechanism for decoding information such as an index value indicating a search target frame and for determining the search target frame based thereon.

When the corresponding block has been determined, the motion compensated prediction unit 109 generates a predicted picture *Pred* for a block *blk* (step Sa6). The simplest method is a method for determining pixel values of the corresponding block as a predicted picture, which is represented by Equation (10).

[Formula 10]

$$Pred[blk] = Dec_{best\_t}[blk + best\_vec] \qquad \cdots\cdots (10)$$

As another method, a predicted picture is generated in consideration of the continuity with a neighboring block using a technique called overlap motion compensation (MC) or a deblocking filter. In this case, because it is not possible to generate a predicted picture for each block, the predicted picture is generated after a corresponding region search has been iterated for each block, and subsequently generation of a residual and a process such as encoding is reiterated for each block.

When the generation of the predicted picture for the block *blk* has been completed, the prediction residual calculation unit 113 generates a residual signal *Res* represented by the difference between the encoding target frame *Org* and the predicted picture *Pred,* and the prediction residual encoding unit 110 encodes the residual signal (step Sa7). Encoded data output as the result of the encoding is an output of the multiview video encoding apparatus 100 and it is also sent to the prediction residual decoding unit 111. Any method can be used to encode the prediction residual. For example, in H.264 disclosed in Non-Patent Document 1, the encoding is performed by sequentially applying a frequency transform such as DCT, quantization, binarization, and entropy encoding.

The prediction residual decoding unit 111 decodes a decoded prediction residual *DecRes* from the input encoded data (step Sa8). It is to be noted that a method for performing decoding on encoded data obtained by a technique used in encoding is used for decoding. In the case of H.264, the decoded prediction residual is obtained by sequentially applying processes of entropy decoding, inverse binarization, inverse quantization, and an inverse frequency transform such as an inverse discrete cosine transform (IDCT). As shown in Equation (11), the decoded picture calculation unit 114 generates a local decoded picture $Dec_{cur}[blk]$ by adding the predicted signal *Pred* to the obtained decoded prediction residual *DecRes* (step Sa9). For use in the future prediction, the generated local decoded picture is stored in the decoded picture memory 112 (step Sa10).

[Formula 11]

$$Dec_{cur}[blk] = Pred[blk] + Dec\,Res[blk] \qquad \cdots\cdots (11)$$

In the first embodiment, one corresponding block is determined by the corresponding block search of step Sa5. However, a prediction signal can also be generated in such a way that a plurality of blocks are selected using a pre-defined method, and when the motion compensated prediction signal is generated in step Sa6, a pre-defined process such as an average value and a median value is applied to the plurality of blocks. As a method for determining the number of the blocks in advance, there is a method for directly specifying the number of the blocks, a method for defining a condition related to a matching cost and selecting all the blocks satisfying the condition, and a method based on a combination of both of the methods.

As a method based on the combination of both of the method, for example, there is a method for selecting a pre-defined number of blocks in which their matching costs have smaller values among matching costs that are less than a threshold value. In addition, when the number of the blocks is not determined in advance, there is a method for encoding information indicating the number of the blocks and transmitting it to the decoding side. As a method for generating a predicted signal from a plurality of candidates, a single method may be determined in advance, or information indicating which method is to be used may be encoded and transmitted.

In addition, in the first embodiment, a frame of the same time as an encoding target frame is not included in search target frames; however, an already decoded region may be used as a search target.

In the above-described first embodiment, a view synthesized picture corresponding to a processing picture is generated using a similar method as view synthesis prediction or view interpolation prediction, and a corresponding point on a reference picture is searched for using the view synthesized picture, thereby a motion vector is estimated. As a result, it is possible to accurately estimate the motion vector even in a situation in which the processing picture cannot be obtained.

It is to be noted that as a conventional scheme of estimating a motion vector in a situation in which there is no processing picture, there is a method for assuming that an object has uniform linear motion, and estimating a motion vector of a processing picture from a motion vector obtained between a plurality of frames at different times other than the processing picture (Non-Patent Document 8: J. Ascenso, C. Brites, and F. Pereira, "Improving frame interpolation with spatial motion smoothing for pixel domain distributed video coding", in the 5th EURASIP Conference on Speech and Picture Processing, Multimedia Communications and Services, July 2005). It is to be noted that this concept is used as a temporal direct mode in H.264 disclosed in Non-Patent Document 1.

For example, when the time interval between frames is very small or when an object regularly moves, it is possible to estimate a motion vector with a certain extent of accuracy even using a method that assumes such a motion of the object. However, because the motion of the object is generally non-linear and it is difficult to model the motion, with such a technique, it is difficult to estimate the motion vector with high accuracy.

In addition, there is also a method for estimating a motion vector using spatial continuity of motion vectors without assuming the motion of an object. Non-Patent Document 9 (S. Kamp, M. Evertz, and M. Wien, "Decoder side motion vector derivation for inter frame video coding", ICIP 2008, pp. 1120-1123, October 2008) discloses a method for estimating a motion vector of a processing region by obtaining a region corresponding to a neighboring region of the processing region when a processing picture has been obtained in the neighboring region.

Because the motion depends upon the object and the same object is usually photographed in the neighboring region, it is possible to estimate the motion vector with a certain extent of accuracy using this technique. However, a picture of the neighboring region is required, and it is impossible to estimate a correct motion vector if the same object is not photographed in the neighboring region. In addition, because even the same object may have a different motion, it is impossible to realize highly accurate motion vector estimation except for in limited situations.

Unlike such a conventional scheme, in the technique of the present embodiment, a video signal of a region for which a motion is to be obtained is synthesized using an inter-view correlation and a corresponding region is searched for using the synthesized result. Thus, it is not necessary to assume temporal regularity and spatial similarity for motion, and it is possible to estimate a highly accurate motion vector for any video.

In addition, in the above-described first embodiment, a degree of reliability indicating the certainty of a view synthesized picture is set for each pixel of the view synthesized picture, and a weight is assigned to a matching cost for each pixel based on the degree of reliability. An error may be generated in the view synthesized picture synthesized using an inter-camera correlation. When a corresponding region search is performed using a template including such an error, the estimation accuracy of a motion vector is deteriorated due to an influence of the error. Thus, in the first embodiment, the degree of reliability indicating the certainty of a view synthesized picture is set for each pixel of the synthesized picture, and a weight is assigned to a matching cost for each pixel based on the degree of reliability. By doing so, an accurately synthesized pixel is regarded as important, and highly accurate motion vector can be estimated, without being affected by the error in view synthesis.

As information indicating the certainty of synthesis necessary to set the degree of reliability, it is possible to use the variance or the difference value for pixel values of a group of corresponding pixels on a reference camera video (a video taken by a reference camera) used when a pixel is synthesized. In addition, when a disparity or a depth that is necessary to perform view synthesis is estimated, if a technique called belief propagation (Non-Patent Document 5) is used, a probability distribution of the disparity or the depth is obtained for each pixel, and therefore its information may be used. In addition, even when the belief propagation is not used, there is a method for modeling a change in the error amount or the variance value of pixel values of a group of corresponding pixels on a reference camera video when the value of a depth is varied using a normal distribution or a Laplace distribution, and for setting the degree of reliability based on its variance value.

B. Second Embodiment

Next, a second embodiment of the present invention will be described.

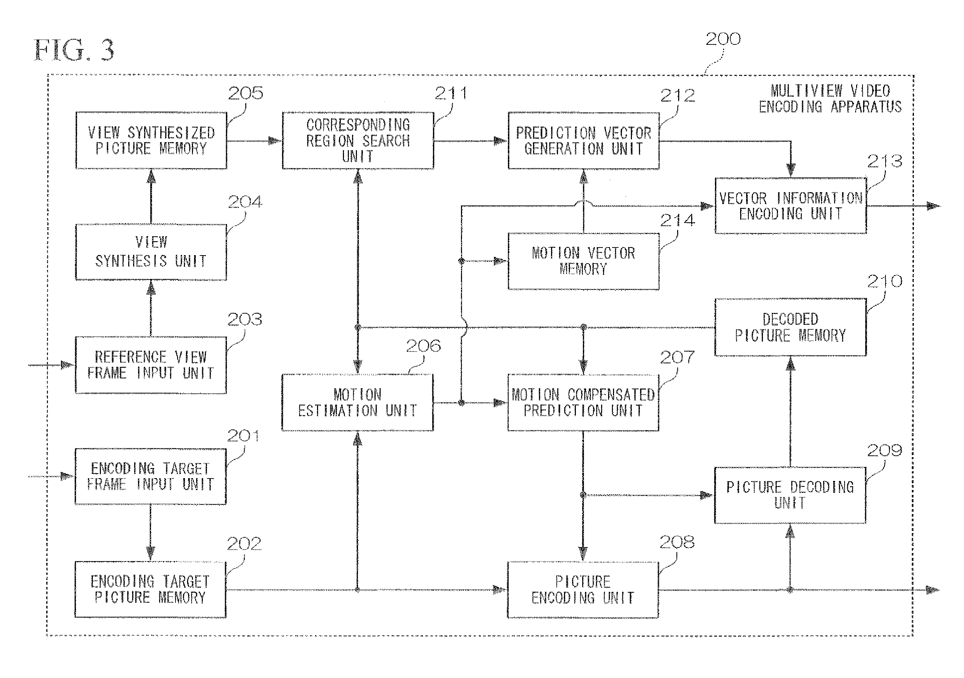

FIG. 3 is a block diagram illustrating a configuration of a multiview video encoding apparatus in the second embodiment. As illustrated in FIG. 3, the multiview video encoding apparatus 200 is provided with an encoding target frame input unit 201, an encoding target picture memory 202, a reference view frame input unit 203, a view synthesis unit 204, a view synthesized picture memory 205, a motion estimation unit 206, a motion compensated prediction unit 207, a picture encoding unit 208, a picture decoding unit 209, a decoded picture memory 210, a corresponding region search unit 211, a prediction vector generation unit 212, a vector information encoding unit 213, and a motion vector memory 214.

The encoding target frame input unit 201 inputs a video frame serving as an encoding target. The encoding target picture memory 202 stores the input encoding target frame. The reference view frame input unit 203 inputs a video frame for a view different from that of the encoding target frame. The view synthesis unit 204 generates a view synthesized picture for the encoding target frame using the input reference view frame.

The view synthesized picture memory 205 stores the generated view synthesized picture. The motion estimation unit 206 estimates a motion between the encoding target frame and a reference frame for each unit block for encoding of the encoding target frame. The motion compensated prediction unit 207 generates a motion compensated prediction picture based on the result of the motion estimation. The picture encoding unit 208 receives the motion compensated prediction picture, performs predictive encoding of the encoding target frame, and outputs encoded data. The picture decoding unit 209 receives the motion compensated prediction picture and the encoded data, decodes the encoding target frame, and outputs a decoded picture.

The decoded picture memory 210 stores the decoded picture of the encoding target frame. The corresponding region search unit 211 searches for an estimated vector representing a corresponding block in the reference frame of motion compensated prediction for each unit block for encoding of the view synthesized picture. The prediction vector generation unit 212 generates a prediction vector for a motion vector of an encoding target block from the estimated vector and motion vectors used for motion compensation in blocks neighboring the encoding target block. The vector information encoding unit 213 performs predictive encoding of the motion vector using the generated prediction vector. The motion vector memory 214 stores the motion vector.

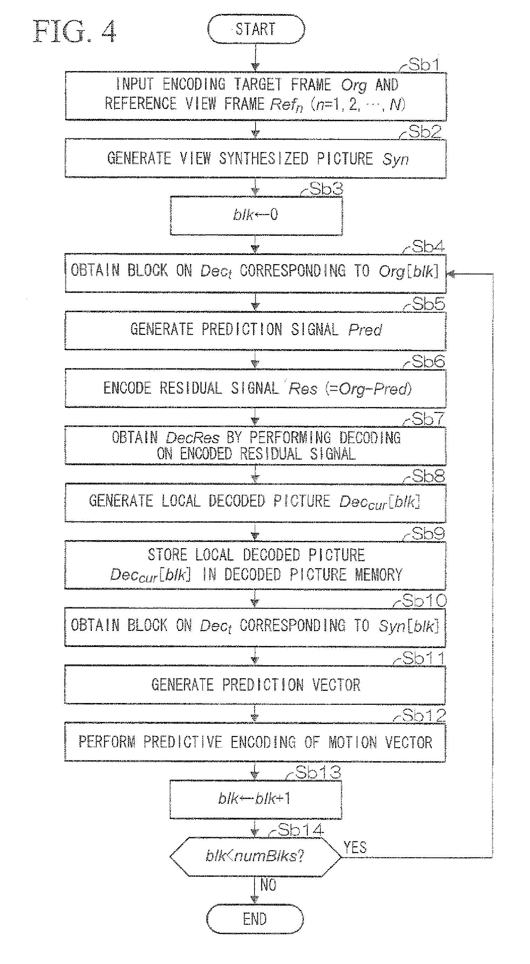

FIG. 4 is a flowchart describing an operation of the multiview video encoding apparatus 200 in the second embodiment. A process executed by the multiview video encoding apparatus 200 in the second embodiment will be described in detail based on this flowchart.

First, an encoding target frame $Org$ is input by the encoding target frame input unit 201 and stored in the encoding target picture memory 202 (step Sb1). In addition, a reference view frame $Ref_n$ ($n$=1, 2, ..., $N$) taken at a reference view simultaneously with the encoding target frame $Org$ is input by the reference view frame input unit 203 (step Sb1). Here, the input reference view frame is assumed to be obtained by decoding an already encoded picture. This is to prevent encoding noise such as drift from being generated, by using the same information as information obtained at a decoding apparatus. However, when the generation of encoding noise is allowed, an original picture before encoding may be input. It is to be noted that $n$ is an index indicating a reference view and $N$ is the number of available reference views.

Next, the view synthesis unit 204 synthesizes a picture taken at the same view simultaneously with the encoding target frame using the reference view frame, and stores the generated view synthesized picture $Syn$ in the view synthesized picture memory 205 (step Sb2). The process executed here is the same as step Sa2 of the first embodiment.

When the view synthesized picture for the encoding target frame is generated, the encoding target frame is divided into blocks, and a video signal of the encoding target frame is encoded while a corresponding point search and generation of a predicted picture is performed for each region (steps Sb3 to Sb14). That is, when an index of an encoding target block is denoted by $blk$ and the total number of encoding target blocks is denoted by $numBlks$, after $blk$ is initialized to 0 (step Sb3), the following process (steps Sb4 to Sb12) is iterated until $blk$ reaches $numBlks$ (step Sb14) while incrementing $blk$ by 1 (step Sb13). It is to be noted that if it is possible to generate the view synthesized picture for each encoding target block, this process can also be performed as part of a process iterated for each encoding target block. For example, this includes the case in which depth information for the encoding target block is given.

In the process iterated for each encoding target block, first, the motion estimation unit 206 finds a block on a reference frame corresponding to the encoding target block $Org[blk]$ (step Sb4). This process is called motion prediction, and any method can be used therefor. A two-dimensional vector that represents the offset from the block $blk$ for designating a corresponding block is called a motion vector, which is denoted by $mv$ in the second embodiment. The motion vector $mv$ is stored in the motion vector memory 214 for use in processing for subsequent blocks.

When the motion estimation ends, the motion compensated prediction unit 207 generates a motion compensated prediction signal *Pred*[*blk*] for the encoding target block *Org*[*blk*] as shown in the following Equation (12) (step Sb5).
[Formula 12]

$$Pred\big[blk\big] = Dec_{ref}\big[blk + mv\big] \qquad \cdots\cdots\cdots (12)$$

It is to be noted that *ref* is an index indicating the reference frame. In addition, in the second embodiment, an example of the prediction method using only one reference frame has been described; however, it can be extended to a scheme using a plurality of reference frames such as bi-prediction used in H.264 or the like. When two reference frames are used, motion estimation is performed for the respective reference frames and a prediction signal is generated using their average value.

When the motion compensated prediction signal is obtained, the picture encoding unit 208 performs predictive encoding of the encoding target block *Org*[*blk*] using the motion compensated prediction signal *Pred[blk]*. Specifically, a residual signal *Res* represented by the difference between the encoding target block *Org* and the motion compensated prediction signal *Pred* is obtained and encoded (step Sb6). Any method can be used for encoding the residual signal. For example, in H.264 disclosed in Non-Patent Document 1, the encoding is performed by sequentially applying a frequency transform such as DCT, quantization, binarization, and entropy encoding. Data of this encoding result becomes part of an output of the multiview video encoding apparatus 200 in the second embodiment.

The picture decoding unit 209 performs decoding on data of the encoding result for use in prediction when subsequent frames are encoded. In decoding, first, the prediction residual signal which has been encoded is decoded (step Sb7), and the motion compensated prediction signal *Pred* is added to the obtained decoded prediction residual signal *DecRes,* so that a local decoded picture *Dec*$_{cur}$[*blk*] is generated (step Sb8). The obtained local decoded picture is stored in the decoded picture memory 210 (step Sb9). It is to be noted that a method for performing decoding on encoded data obtained by a technique used in encoding is used for decoding. In the case of H.264, a decoded prediction residual signal is obtained by sequentially applying processes of entropy decoding, inverse binarization, inverse quantization, and an inverse frequency transform such as an IDCT.

Next, the motion vector mv obtained by the motion estimation of step Sb4 and used for the motion compensated prediction of step Sb5 is encoded. To this end, first, the correspondence region search unit 211 finds a corresponding block on the reference frame corresponding to the view synthesized picture *Syn*[*blk*] (step Sb10). In the second embodiment, a two-dimensional vector that represents the offset from the block *blk* for designating the corresponding block is called an estimated vector *vec.* The process here is similar to step Sa5 of the first embodiment. However, since the second embodiment shows an example in which the degree of reliability $\rho$ is not used, all of $\rho$ are 1, and thus the multiplication by $\rho$ can be omitted. Of course, the degree of reliability may be set and used as in the first embodiment.

When the estimated vector *vec* is obtained, the prediction vector generation unit 212 generates a prediction vector *pmv* for the motion vector *mv* of the encoding target block using the estimated vector and motion vectors used in blocks neighboring the encoding target block stored in the motion vector memory 214 (step Sb11).

The optimum motion vectors actually used in neighboring regions are vectors having higher accuracy in the neighboring regions than the motion vector (that is, the estimated vector) estimated using the view synthesized picture. Therefore, if there is spatial similarity, it is possible to reduce the amount of a difference vector, which must be encoded, by generating a prediction vector using these vectors. However, if there is no spatial similarity with the neighboring regions, the amount of the difference vector may be increased by contraries. Therefore, the present embodiment determines whether or not there is spatial similarity using the motion vector estimated using the view synthesized picture, and if the presence of the spatial similarity is determined, a prediction vector is generated using a group of the optimum vectors of the neighboring regions; otherwise, the motion vector estimated using the view synthesized picture is used. By doing so, the amount of the encoded difference vector is constantly reduced and efficient multiview video encoding is achieved.

As a method for generating a prediction vector from the motion vector estimated using the view synthesized picture and the group of the optimum motion vectors used in the neighboring regions, it is possible to use a method for calculating an average value or a median value for each vector component. In addition, there is a method for determining, as a prediction vector, a vector having the smallest difference from the motion vector estimated using the view synthesized picture among the group of the optimum motion vectors used in the neighboring regions.

In addition, as another method for generating a prediction vector, there is a method for generating a vector by calculating the average value or the median value of only the group of the optimum motion vectors used in the neighboring regions for each vector component, comparing the vector with the motion vector estimated using the view synthesized picture, determining the motion vector estimated using the view synthesized picture as a prediction vector if the difference therebetween is greater than or equal to a separately defined threshold value, and determining the generated vector as a prediction vector if the difference is less than the threshold value. On the other hand, there is also a method for determining the generated vector as a prediction vector if the difference is greater than or equal to the threshold value, and determining the motion vector estimated using the view synthesized picture as a prediction vector if the difference is less than the threshold value. These two methods depend upon how accurately the view synthesized picture has been generated. Thus, it is possible to employ a method in which the prediction vector is determined by the former algorithm if the view synthesized picture has been generated with high accuracy; otherwise the prediction vector is determined by the latter algorithm.

That is, it is possible to use various methods for generating a prediction vector as long as the same method as used at the decoding side is used. For example, the estimated vector *vec* may be used as the prediction vector *pmv* without using the motion vectors of the neighboring blocks, or a motion vector of a neighboring block closest to the estimated vector *vec* may be used as the prediction vector *pmv*. In addition, the prediction vector *pmv* may be generated by calculating the median value or the average value of the estimated vector and the motion vectors of the neighboring blocks for each component. As still another method, there is also a method for generating a vector *pmv'* using the median value or the average value of the motion vectors of the neighboring blocks and for determining the prediction vector *pmv* based on the difference between the vector *pmv'* and the estimated vector *vec.*

When the generation of the prediction vector ends, the vector information encoding unit 213 performs predictive encoding of the motion vector mv (step Sb12). That is, a prediction residual vector represented by the difference between the motion vector *mv* and the prediction vector *pmv* is encoded. The encoding result is one of outputs of the multiview video encoding apparatus 200.

In the second embodiment, the reference frame is pre-defined or information indicating the used reference frame is encoded as in H.264 so that the selection of the reference frame is consistent with that of the decoding side. However, step Sb10 may be performed before step Sb4, a decoded frame that minimizes a matching cost may be determined from among a plurality of candidates, and the determined frame may be used as the reference frame. In addition, when the information indicating the used reference frame is encoded as in H.264, it is possible to reduce a bitrate by switching encoding tables so that the bitrate of information indicating the frame that minimizes the matching cost becomes small.

In the above-described second embodiment, a motion vector for using a temporal correlation is predicted using a picture at an encoding target view obtained by view synthesis utilizing an inter-camera correlation. Thereby, a bitrate of a motion vector necessary for motion compensated prediction can be reduced, and thus it is possible to realize efficient multiview video encoding. It is to be noted that in the present embodiment, the inter-camera correlation is used for generation of the motion vector and the temporal correlation is used for prediction of the video signal, and thus the two correlations can be simultaneously used.

By the way, an error may be generated in a view synthesized picture synthesized using the inter-camera correlation. When a corresponding region search is performed using a template including such an error, the estimation accuracy of a motion vector is deteriorated due to an influence of the error. Thus, the second embodiment proposes a method in which a degree of reliability indicating the certainty of a view synthesized picture is set for each pixel of the synthesized picture, and a weight is assigned to a matching cost for each pixel based on the degree of reliability. By doing so, an accurately synthesized pixel is regarded as important, and a motion vector can be predicted appropriately, without being affected by an error in view synthesis.

In addition, if the view synthesized picture can be generated with high accuracy, it is possible to generate a motion vector necessary for motion compensated prediction based on the first embodiment. However, the view synthesized picture is not constantly generated with high accuracy. Thus, with a corresponding region search using a view synthesized picture including an error, the optimum motion vector in terms of encoding efficiency is not constantly found with sub-pixel accuracy. In addition, when an appropriate motion vector cannot be set, it is impossible to realize efficient compression encoding because a residual amount, which must be encoded based on the result of motion compensated prediction, is increased. In contrast, the optimum corresponding region in terms of encoding efficiency can be constantly found with any accuracy by a corresponding region search using the encoding target frame. Thus, a predicted picture is generated using the optimum motion vector found by the corresponding region search using the encoding target frame, and when the optimum motion vector is encoded, the encoding is performed using the difference from a motion vector that has been estimated at a constant level of accuracy using the view synthesized picture. By doing so, it is also possible to reduce a bitrate necessary for encoding the optimum motion vector while preventing an increase in the amount of a residual that must be encoded. That is, in the second embodiment, it is possible to reduce a bitrate of a motion vector while performing motion compensated prediction using an appropriate motion vector even when an error is generated in the view synthesized picture. Thus, it is possible to more robustly realize efficient compression encoding.

It is to be noted that in the motion search step (step Sb4), the difference in pixel value between corresponding regions may be used as a matching cost, and a corresponding region search may be performed using a rate distortion cost, which is capable of integrally evaluating a bitrate necessary for encoding a difference vector and the amount of motion compensated prediction residual to be encoded. In general, when the latter cost function is used, the encoding efficiency of multiview video encoding becomes high. However, if the rate distortion cost is used, it is necessary to perform steps Sb10 and Sb11 before step Sb4 of the second embodiment. Because these two steps are independent of the process of steps Sb4 to Sb9, the orders can be interchanged.

It is to be noted that in Non-Patent Document 1, when a motion vector is encoded, the encoding is performed based on the difference between the motion vector and a prediction vector estimated from motion vectors in neighboring regions using spatial similarity, thereby realizing efficient encoding. However, if, for example, an object different from that in a neighboring region is photographed in a currently processed block, the difference between a motion vector and a prediction vector generated by assuming spatial similarity becomes large and hence efficient encoding cannot be realized. In the present embodiment, a video signal for a currently processed block is obtained by inter-camera prediction, and a vector estimated based thereon is used as a prediction vector. By doing so, it is possible to generate a prediction vector closer to the motion vector even when there is no spatial similarity.

C. Third Embodiment

Next, a third embodiment of the present invention will be described.

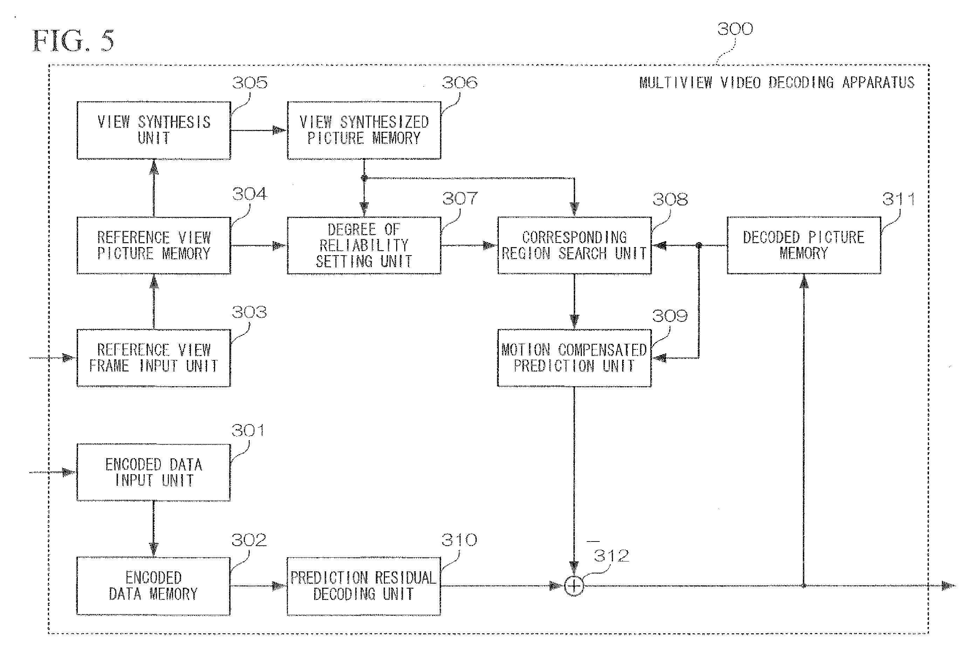

FIG. 5 is a block diagram illustrating a configuration of a multiview video decoding apparatus in the third embodiment. As illustrated in FIG. 5, the multiview video decoding apparatus 300 is provided with an encoded data input unit 301, an encoded data memory 302, a reference view frame input unit 303, a reference view picture memory 304, a view synthesis unit 305, a view synthesized picture memory 306, a degree of reliability setting unit 307, a corresponding region search unit 308, a motion compensated prediction unit 309, a prediction residual decoding unit 310, a decoded picture memory 311, and a decoded picture calculation unit 312.

The encoded data input unit 301 inputs encoded data of a video frame serving as a decoding target. The encoded data memory 302 stores the input encoded data. The reference view frame input unit 303 inputs a video frame (reference view frame) for a view (reference view) different from that of a view (decoding target view) at which a decoding target frame has been taken. The reference view picture memory 304 stores the input reference view frame.

The view synthesis unit 305 generates a view synthesized picture for the decoding target frame using the reference view frame. The view synthesized picture memory 306 stores the generated view synthesized picture. The degree of reliability setting unit 307 sets a degree of reliability for each pixel of the generated view synthesized picture. The corresponding region search unit 308 searches for a motion vector representing a corresponding block in an already decoded frame which serves as a reference frame of motion compensated prediction and has been taken at the same view as the decoding target frame, for each unit block for encoding of the view synthesized picture, using the degrees of reliability.

The motion compensated prediction unit 309 generates a motion compensated prediction picture using the reference frame based on the determined corresponding block. The prediction residual decoding unit 310 decodes a prediction residual signal from the encoded data. The decoded picture calculation unit 312 calculates a decoded picture of the decoding target frame by summing the decoded prediction residual signal and the motion compensated prediction picture. The decoded picture memory 311 stores the decoded picture.

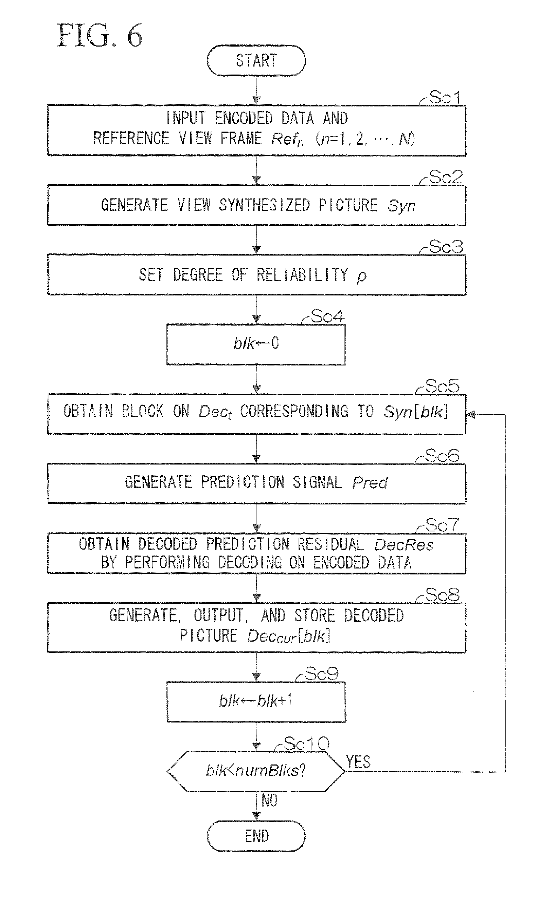

FIG. 6 is a flowchart describing an operation of the multiview video decoding apparatus 300 in the third embodiment. A process to be executed by the multiview video decoding apparatus 300 in the third embodiment will be described in detail based on this flowchart.

First, encoded data of a decoding target frame is input by the encoded data input unit 301 and stored in the encoded data memory 302 (step Sc1). In addition, a reference view frame $Ref_n$ ($n$=1, 2, ..., $N$) taken at a reference view simultaneously with the decoding target frame is input by the reference view frame input unit 303, and stored in the reference view picture memory 304 (step Sc1). Here, n is an index indicating a reference view and N is the number of available reference views.

Next, the view synthesis unit 305 synthesizes a picture taken at the same view simultaneously with the decoding target frame from information of the reference view frame, and stores the generated view synthesized picture $Syn$ in the view synthesized picture memory 306 (step Sc2). This process is the same as step Sa2 of the first embodiment. The degree of reliability setting unit 307 then generates a degree of reliability p indicating the certainty that synthesis of each pixel of the view synthesized picture was able to be realized (step Sc3). This process is the same as step Sa3 of the first embodiment.

Similar to the first embodiment, if a corresponding point search, a stereo method, or depth estimation is performed when the view synthesized picture is generated, part of a process of obtaining corresponding point information or depth information may be the same as part of calculation of the degrees of reliability. In such cases, it is possible to reduce the amount of computation by simultaneously performing the generation of the view synthesized picture and the calculation of the degrees of reliability.

When the calculation of the degrees of reliability ends, a video signal of the decoding target frame is decoded while a corresponding point search and generation of a predicted picture is performed for each pre-defined block (steps Sc4 to Sc10). That is, when an index of a decoding target block is denoted by *blk* and the total number of decoding target blocks is denoted by *numBlks*, after *blk* is initialized to 0 (step Sc4), the following process (steps Sc5 to Sc8) is iterated until *blk* reaches *numBlks* (step Sc10) while incrementing *blk* by 1 (step Sc9).

It is to be noted that if it is possible to perform the generation of the view synthesized picture and the calculation of the degrees of reliability described above for each decoding target block, these processes can also be performed as part of a process iterated for each decoding target block. For example, this includes the case in which depth information for the decoding target block is given.

In the process iterated for each decoding target block, first, the corresponding region search unit 308 finds a corresponding block on a reference frame corresponding to a block *blk* using the view synthesized picture (step Sc5). This process is the same as step Sa5 of the first embodiment, and the same matching cost, the same search range, and the like as used at the encoding side are used. It is to be noted that the reference frame is a decoded picture obtained by an already completed decoding process. This data is data to be stored in the decoded picture memory 311.

It is to be noted that the third embodiment uses a picture taken by the same camera as that for the decoding target frame at a time different from that of the decoding target frame. However, any frame taken by a camera different from that for the decoding target frame can also be used as long as it is a frame processed before the decoding target frame.

When the corresponding block is determined, the motion compensated prediction unit 309 generates a predicted picture *Pred* for the block *blk* in the same method as in step Sa6 of the first embodiment (step Sc6). The prediction residual decoding unit 310 then obtains a decoded prediction residual *DecRes* by decoding a prediction residual from the input encoded data (step Sc7). This process is the same as step Sa8 of the first embodiment, and the decoding is performed by a process inverse to the method used to encode the prediction residual at the encoding side.

Then, as in step Sa9 of the first embodiment, the decoded picture calculation unit 312 generates a decoded picture $Dee_{cur}[blk]$ for the block *blk* by adding the prediction signal *Pred* to the obtained decoded prediction residual *DecRes* (step Sc8). The generated decoded picture serves as an output of the multiview video decoding apparatus 300, and is stored in the decoded picture memory 311 for use in prediction for subsequent frames.

## D. Fourth Embodiment

Next, a fourth embodiment of the present invention will be described.

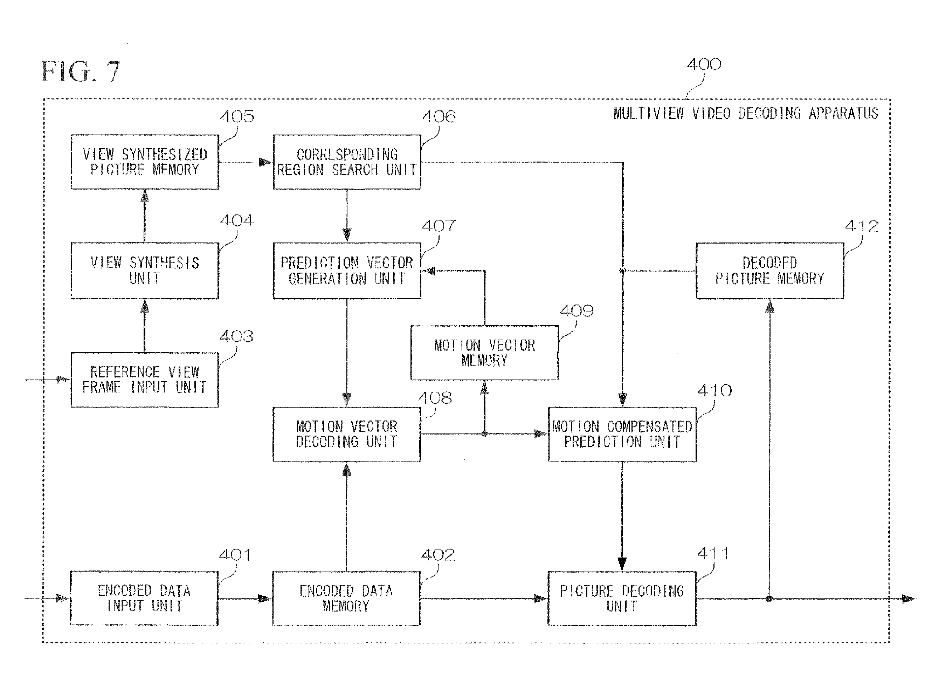

FIG. 7 is a block diagram illustrating a configuration of a multiview video decoding apparatus in the fourth embodiment. As illustrated in FIG. 7, the multiview video decoding apparatus 400 is provided with an encoded data input unit 401, an encoded data memory 402, a reference view frame input unit 403, a view synthesis unit 404, a view synthesized picture memory 405, a corresponding region search unit 406, a prediction vector generation unit 407, a motion vector decoding unit 408, a motion vector memory 409, a motion compensated prediction unit 410, a picture decoding unit 411, and a decoded picture memory 412.

The encoded data input unit 401 inputs encoded data of a video frame serving as a decoding target. The encoded data memory 402 stores the input encoded data. The reference view frame input unit 403 inputs a video frame for a view different from that of the decoding target frame. The view synthesis unit 404 generates a view synthesized picture for the decoding target frame using the input reference view frame.

The view synthesized picture memory 405 stores the generated view synthesized picture. The corresponding region search unit 406 searches for an estimated vector indicating a corresponding block on a reference frame of motion compensated prediction for each unit block for decoding of the view synthesized picture. The prediction vector generation unit 407 generates a prediction vector for a motion vector of the decoding target block from the estimated vector and motion vectors used for motion compensation in blocks neighboring the decoding target block.

The motion vector decoding unit 408 decodes a motion vector subjected to predictive encoding from the encoded data using the generated prediction vector. The motion vector memory 409 stores the motion vector. The motion compensated prediction unit 410 generates a motion compensated prediction picture based on the decoded motion vector. The picture decoding unit 411 receives the motion compensated prediction picture, decodes a decoding target frame subjected to predictive encoding, and outputs a decoded picture. The decoded picture memory 412 stores the decoded picture.

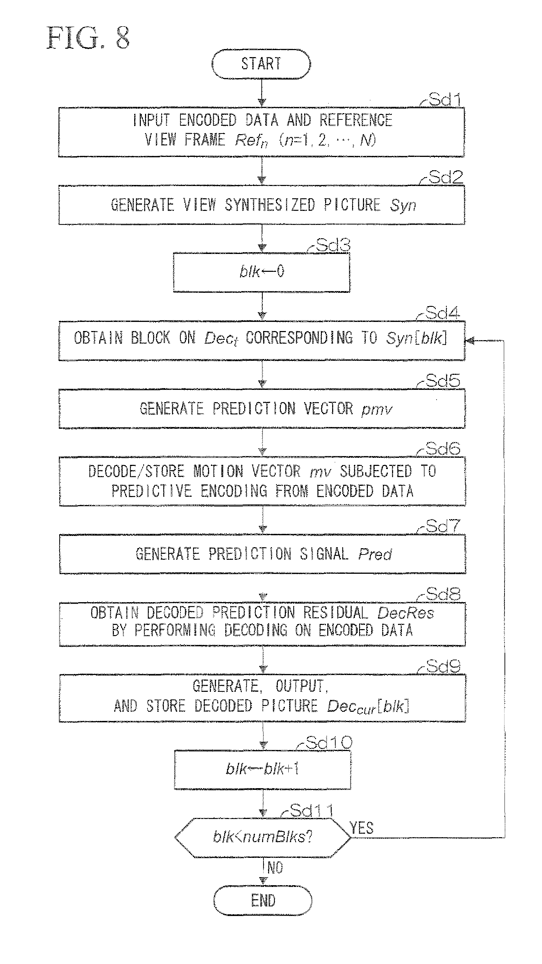

FIG. 8 is a flowchart describing an operation of the multiview video decoding apparatus 400 in the fourth embodiment. A process to be executed by the multiview video decoding apparatus 400 in the fourth embodiment will be described in detail based on this flowchart.

First, encoded data of a decoding target frame is input by the encoded data input unit 401 and stored in the encoded data memory 402 (step Sd1). In addition, a reference view frame $Ref_n$ (*n*=1, 2, ..., N) taken at a reference view simultaneously with the decoding target frame is input by the reference view frame input unit 403 (step Sd1). Here, *n* is an index indicating a reference view and *N* is the number of available reference views. It is to be noted that the encoded data includes at least two types of data of a prediction residual of a video signal and a prediction residual of a motion vector used in prediction for video.

Next, the view synthesis unit 404 synthesizes a picture taken at the same view simultaneously with the decoding target frame using the reference view frame, and stores the generated view synthesized picture *Syn* in the view synthesized picture memory 405 (step Sd2). The process performed here is the same as step Sb2 of the second embodiment.

When the view synthesized picture for the decoding target frame is generated, a video signal of the decoding target frame and a motion vector are decoded while a corresponding point search and generation of a predicted picture is performed for each pre-defined block (steps Sd3 to Sd11). That is, when an index of a decoding target block is denoted by *blk* and the total number of decoding target blocks is denoted by *numBlks,* after *blk* is initialized to 0 (step Sd3), the following process (steps Sd4 to Sd9) is iterated until *blk* reaches *numBlks* (step Sd11) while incrementing *blk* by 1 (step Sd10). It is to be noted that if it is possible to generate the view synthesized picture for each decoding target block, this process can also be performed as part of a process iterated for each decoding target block. For example, this includes the case in which depth information for the decoding target block is given.

In the process iterated for each decoding target block, first, the corresponding region search unit 406 finds a corresponding block on a reference frame corresponding to a view synthesized picture *Syn*[*blk*] (step Sd4). In the fourth embodiment, a two-dimensional vector that represents the offset from the block *blk* for designating the corresponding block is called an estimated vector *vec.* This process is similar to step SblO of the second embodiment. However, the fourth embodiment shows an example in which a degree of reliability is not used. The degree of reliability may be set and used as in the third embodiment.

When the estimated vector *vec* is obtained, the prediction vector generation unit 407 generates a prediction vector *pmv* for the motion vector *mv* of the decoding target block using the estimated vector and motion vectors used in blocks neighboring the decoding target block stored in the motion vector memory 409 (step Sd5). This process is the same as step Sb11 of the second embodiment.

When the generation of the prediction vector ends, the motion vector decoding unit 408 decodes a motion vector *mv* of the decoding target block *blk* from the encoded data (step Sd6). The motion vector *mv* has been subjected to predictive encoding using the prediction vector *pmv,* and the motion vector *mv* is obtained by decoding a prediction residual vector *dmv* from the encoded data and adding the prediction vector *pmv* to the prediction residual vector *dmv.* The decoded motion vector *mv* is sent to the motion compensated prediction unit 410, stored in the motion vector memory 409, and used when a motion vector of a subsequent decoding target block is decoded.

When the motion vector for the decoding target block is obtained, the motion compensated prediction unit 410 generates a motion compensated prediction signal *Pred*[*blk*] for the decoding target block (step Sd7). This process is the same as step Sb5 of the second embodiment.

When the motion compensated prediction signal is obtained, the picture decoding unit 411 decodes a decoding target frame subjected to predictive encoding. Specifically, a prediction residual signal *DecRes* is decoded from the encoded data (step Sd8), and a decoded picture $Dee_{cur}$[*blk*] for the block *blk* is generated by adding the motion compensated prediction signal *Pred* to the obtained decoded prediction residual *DecRes* (step Sd9). The generated decoded picture becomes an output of the multiview video decoding apparatus 400, and is stored in the decoded picture memory 412 for use in prediction for subsequent frames.

Although a view synthesized picture and a reference frame themselves are used in the above-described first to fourth embodiments, when noise such as film grain and encoding distortion is generated in the view synthesized picture and/or the reference frame, the accuracy of a corresponding region search is likely to be deteriorated due to its influence. Because the noise can be assumed to be a high frequency component, it is possible to reduce its influence by performing a search after a low pass filter is applied to frames (the view synthesized picture and the reference frame) for use in the corresponding region search. In addition, as another method, it is possible to prevent an incorrect motion vector due to noise from being estimated, by applying an average filter or a median filter to a motion vector estimated for each block exploiting the fact that motion vectors have a spatial correlation.

E. Fifth Embodiment

Next, a fifth embodiment of the present invention will be described.

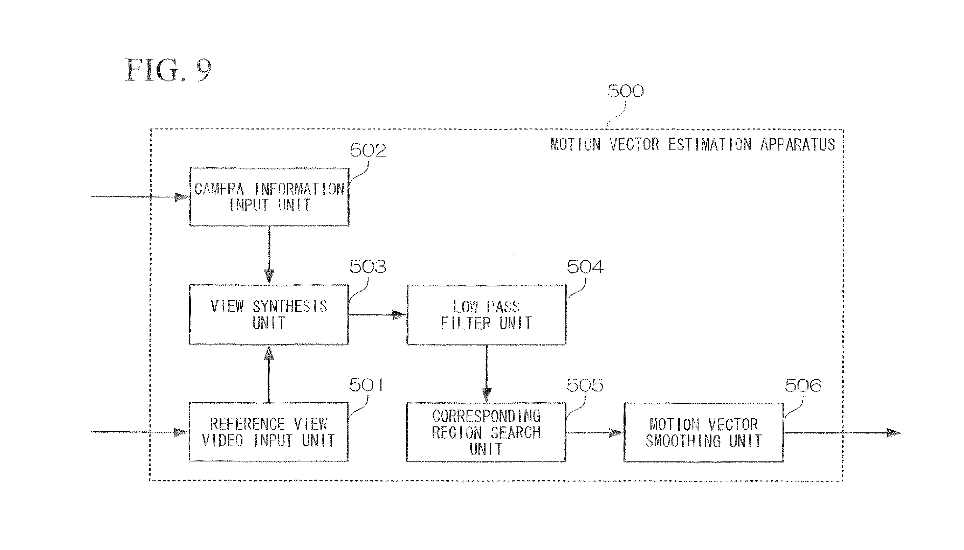

FIG. 9 is a block diagram illustrating a configuration of a motion vector estimation apparatus in the fifth embodiment. As illustrated in FIG. 9, the motion vector estimation apparatus 500 is provided with a reference view video input unit 501, a camera information input unit 502, a view synthesis unit 503, a low pass filter unit 504, a corresponding region search unit 505, and a motion vector smoothing unit 506.

The reference view video input unit 501 inputs a video frame taken at a view (reference view) different from that of a processing target view at which a frame for which motion vectors are to be obtained has been taken. The camera information input unit 502 inputs internal parameters indicating focal lengths or the like and external parameters indicating positions and directions of cameras for the processing target view and the reference view.

The view synthesis unit 503 generates a view synthesized video for the processing target view using a reference view video. The low pass filter unit 504 reduces noise included in the view synthesized video by applying a low pass filter thereto. For each unit block for motion estimation of a frame of the view synthesized video, the corresponding region search unit 505 searches for a motion vector indicating a corresponding block in another frame of the view synthesized video. The motion vector smoothing unit 506 spatially smoothes the motion vector so as to increase the spatial correlation of the motion vector.

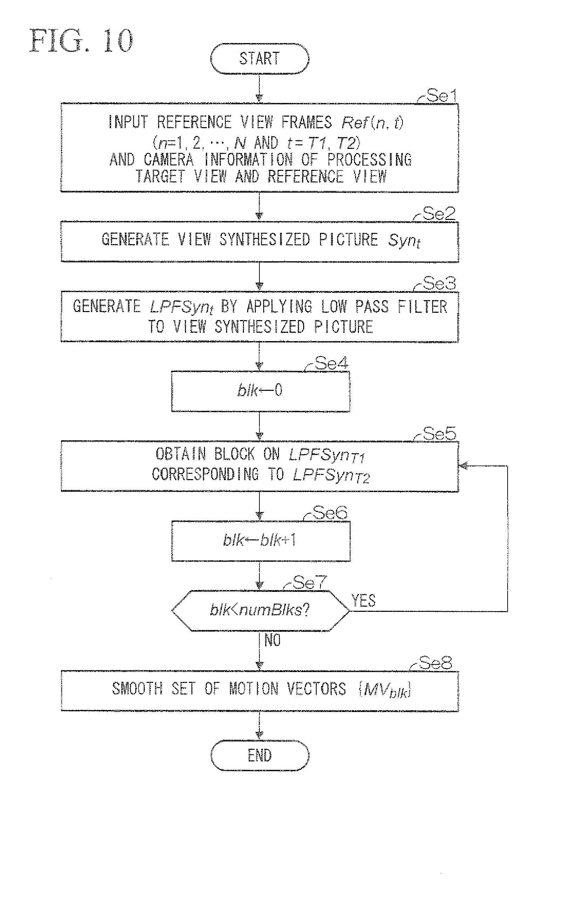

FIG. 10 is a flowchart describing an operation of the motion vector estimation apparatus 500 in the fifth embodiment. A process to be executed by the motion vector estimation apparatus 500 in the fifth embodiment will be described in detail based on this flowchart.

First, reference view frames *Ref(n,t)* (*n*=1, 2, ..., *N* and *t =T1, T2)* taken at the reference view are input by the reference view picture input unit 501, and sent to the view synthesis unit 503 (step Se1). In addition, internal parameters indicating focal lengths and external parameters indicating positions and directions of cameras for a processing target view and a reference view are input by the camera information input unit 502, and sent to the view synthesis unit 503 (step Se1). Here, *n* is an index indicating a reference view and *N* is the number of available reference views. Additionally, *t* is an index indicating a photographed time of a frame, and the present embodiment describes an example in which a motion vector is estimated between a block of a frame of a time *T1* and each block of a frame of a time *T2*.

Next, the view synthesis unit 503 synthesizes a picture taken at the processing target view for each photographed time using the reference view frames and camera information (step Se2). This process is similar to step Sa2 of the first embodiment. However, here, view synthesized pictures $Syn_t$ for the frames of the times *T1* and *T2* are synthesized.

When the synthesis of the view synthesized pictures $Syn_t$ ends, the low pass filter unit 504 applies a low pass filter to the view synthesized pictures and generates noise-reduced view synthesized pictures $LPFSyn_t$ (step Se3). It is to be noted that although any low pass filter may be used, a representative one is an average filter. The average filter is a filter for replacing a pixel signal of a pixel with the average value of picture signals of neighboring pixels.

When the low pass filter process ends, the corresponding region search unit 505 divides a view synthesized picture $LPFSyn_{T2}$ for which motion vectors are to be estimated into blocks, performs a corresponding region search for each region, and generates the motion vectors (steps Se4 to Se7). That is, when an index of a unit block for motion estimation is denoted by *blk* and the total number of unit blocks for motion estimation is denoted by *numBlks,* after *blk* is initialized to 0 (step Se4), a process (step Se5) of searching for a block corresponding to a view synthesized picture $LPFSyn_{T2}[blk]$ on the view synthesized picture $LPFSyn_{T1}$ is iterated until *blk* reaches *numBlks* (step Se7) while incrementing *blk* by 1 (step Se6).

The corresponding region search process (step Se5) is similar to step Sa5 of the first embodiment, except that different frames are used. That is, it is a process of obtaining a pair of *(best_vec, best_t)* represented by Equation (9) using a matching cost in which *Syn* is replaced with $LPFSyn_{T2}$ and $Dec_t$ is replaced with $LPFSyn_{T1}$ in Equations (5) to (8). However, in the present embodiment, a search range of *t* is only *T1*, and thus *best_t* becomes *T1*.

When motion vectors are obtained for all the blocks, the motion vector smoothing unit 506 smoothes a set of the obtained motion vectors $\{MV_{blk}\}$ so as to increase a spatial correlation (step Se8). A set of the smoothed vectors becomes an output of the motion vector estimation apparatus 500.

Although any method for smoothing a motion vector may be used, for example, there is a method for applying an average filter. The process of the average filter used herein is a process of determining, as a motion vector of a block *blk,* a vector represented by the average value of motion vectors of blocks neighboring the block *blk.* It is to be noted that because this motion vector is two-dimensional information, a process of calculating the average value is performed for each dimension. As another specific example, there is a method for applying a vector median filter. The vector median filter first generates a set of motion vectors $X=\{MV_k\}$ of nearby blocks for the block *blk.* Then, $Mv'_{blk}$ obtained by the following Equation (13) is determined as a smoothed vector for the block *blk.*

[Formula 13]

$$MV'_{blk} = \arg\min_{MV_k \in X} \sum_{MV_i \in X} w_i \left\| MV_k - MV_i \right\| \qquad \cdots \cdots \cdots (13)$$

It is to be noted that $\|v\|$ denotes a norm of $v$. Although any norm may be used, an L1 norm and an L2 norm are representative norms. The L1 norm is the sum of the absolute values of respective components of v, and the L2 norm is the sum of the squares of the respective components of $v$. In addition, $w_i$ is a weight, and it may be set using a certain method. For example, a value defined by the following Equation (14) may be used.

[Formula 14]

$$w_i = \frac{Cost(MV_{blk}, T1)}{Cost(MV_i, T1)} \qquad \cdots\cdots (14)$$

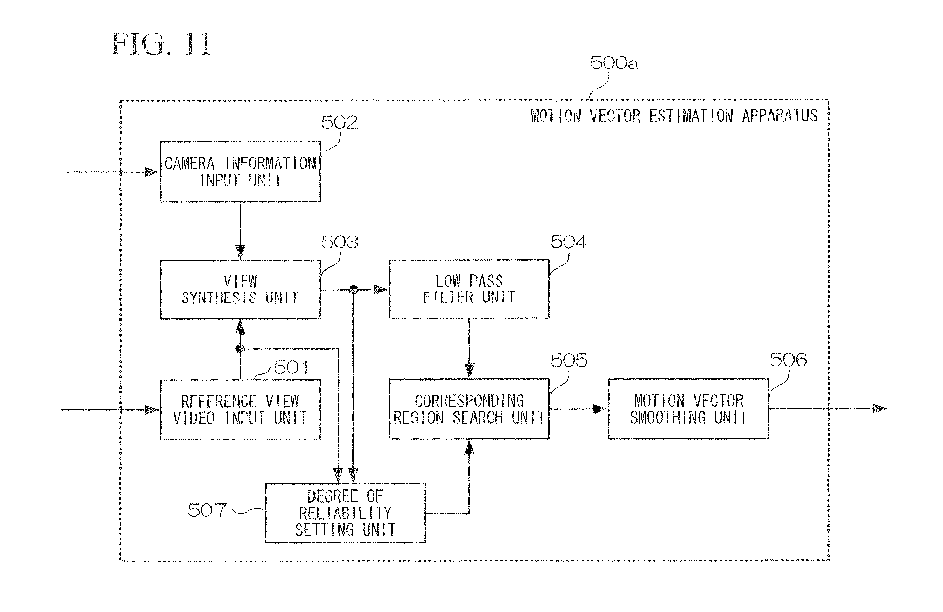

It is to be noted that although the degrees of reliability of the view synthesized pictures are not calculated in the fifth embodiment, the degrees of reliability of the view synthesized pictures may be calculated and used as in the first embodiment. FIG. 11 is a block diagram illustrating a configuration of a motion vector estimation apparatus 500a in this case. The motion vector estimation apparatus 500a is provided with a degree of reliability setting unit 507 in addition to the constituent elements provided in the motion vector estimation apparatus 500 illustrated in FIG. 9. For example, a configuration of the degree of reliability setting unit 507 is similar to the configuration of the degree of reliability setting unit 107 illustrated in FIG. 1. However, the motion vector estimation apparatus 500a is different from the motion vector estimation apparatus 500 in that a video is input, rather than a frame (picture). In addition, in the fifth embodiment, a frame from which a corresponding region is searched is also a view synthesized picture, and thus the degrees of reliability may also be calculated and used for a view synthesized picture serving as a search space. Furthermore, the degrees of reliability for respective pictures may be calculated and simultaneously used. When the degrees of reliability are simultaneously used, equations for calculating matching costs corresponding to Equations (5) to (8) are the following Equations (15) to (18). It is to be noted that $\xi$ is a degree of reliability for the view target picture serving as the search space.

[Formula 15]

$$Cost(vec, t) = \sum_{p \in blk} \rho[p] \cdot \xi[p + vec] \cdot \left| Syn[p] - Dec_t[p + vec] \right| \qquad \cdots\cdots (15)$$

[Formula 16]

$$Cost(vec, t) = \sum_{p \in blk} \rho[p] \cdot \xi[p + vec] \cdot \left( Syn[p] - Dec_t[p + vec] \right)^2 \qquad \cdots\cdots (16)$$

[Formula 17]

$$Cost(vec, t) = \left\| \rho[blk] \cdot \xi[p + vec] \cdot A \cdot (Syn[blk] - Dec_t[blk + vec]) \right\|$$

$$\cdots\cdots (17)$$

[Formula 18]

$$Cost(vec, t) = \left\| \rho[blk] \cdot \xi[p + vec] \cdot A \cdot (|Syn[blk] - Dec_t[blk + vec]|) \right\|$$

$$\cdots\cdots (18)$$

F. Sixth Embodiment

Next, a sixth embodiment of the present invention will be described.

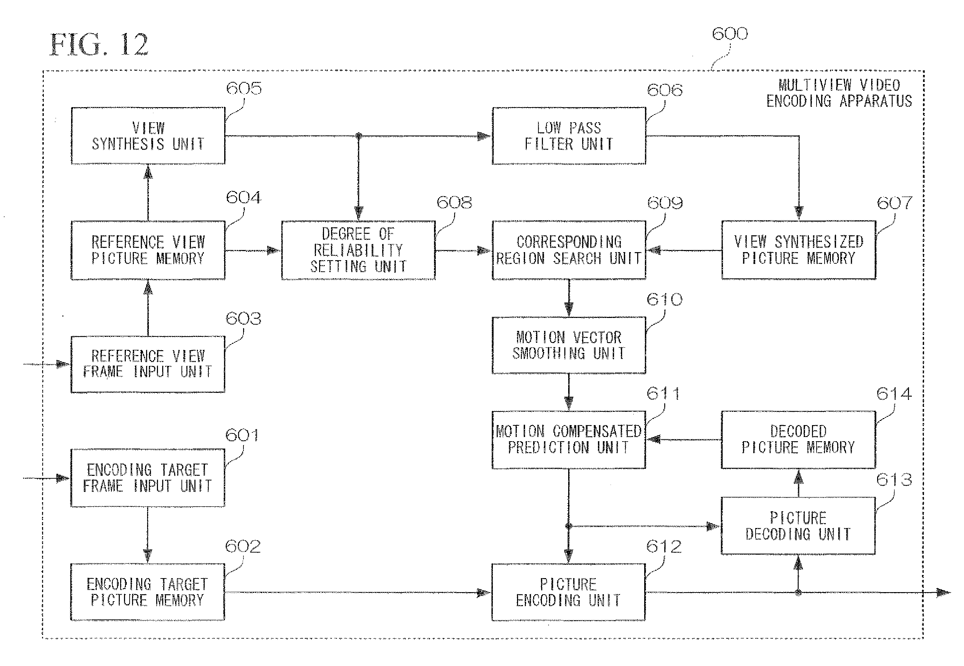

FIG. 12 is a block diagram illustrating a configuration of a multiview video encoding apparatus in the sixth embodiment. As illustrated in FIG. 12, the multiview video encoding apparatus 600 is provided with an encoding target frame input unit 601, an encoding target picture memory 602, a reference view frame input unit 603, a reference view picture memory 604, a view synthesis unit 605, a low pass filter unit 606, a view synthesized picture memory 607, a degree of reliability setting unit 608, a corresponding region search unit 609, a motion vector smoothing unit 610, a motion compensated prediction unit 611, a picture encoding unit 612, a picture decoding unit 613, and a decoded picture memory 614.

The encoding target frame input unit 601 inputs a video frame serving as an encoding target. The encoding target picture memory 602 stores the input encoding target frame. The reference view frame input unit 603 inputs a video frame for a view different from that of the encoding target frame. The reference view picture memory 604 stores the input reference view frame. The view synthesis unit 605 generates view synthesized pictures for the encoding target frame and a reference frame using the reference view frame.

The low pass filter unit 606 reduces noise included in a view synthesized video by applying a low pass filter thereto. The view synthesized picture memory 607 stores a view synthesized picture subjected to the low pass filter process. The degree of reliability setting unit 608 sets a degree of reliability for each pixel of the generated view synthesized picture. The corresponding region search unit 609 searches for a motion vector representing a corresponding block on an already encoded frame which serves as the reference frame of motion compensated prediction and has been taken at the same view as the encoding target frame for each unit block for encoding of the view synthesized picture, using the view synthesized picture subjected to the low pass filter process generated for the reference frame and the degrees of reliability. That is, by assigning a weight to a matching cost when a corresponding region is searched for based on the degrees of reliability, an accurately synthesized pixel is regarded as important, and highly accurate motion vector estimation is realized, without being affected by an error in view synthesis. The motion vector smoothing unit 610 spatially smoothes the motion vector so as to increase the spatial correlation of the motion vector.

The motion compensated prediction unit 611 generates a motion compensated prediction picture using the reference frame based on the determined corresponding block. The picture encoding unit 612 receives the motion compensated prediction picture, performs predictive encoding of the encoding target frame, and outputs encoded data. The picture decoding unit 613 receives the motion compensated prediction picture and the encoded data, decodes the encoding target frame, and outputs a decoded picture. The decoded picture memory 614 stores the decoded picture of the encoding target frame.

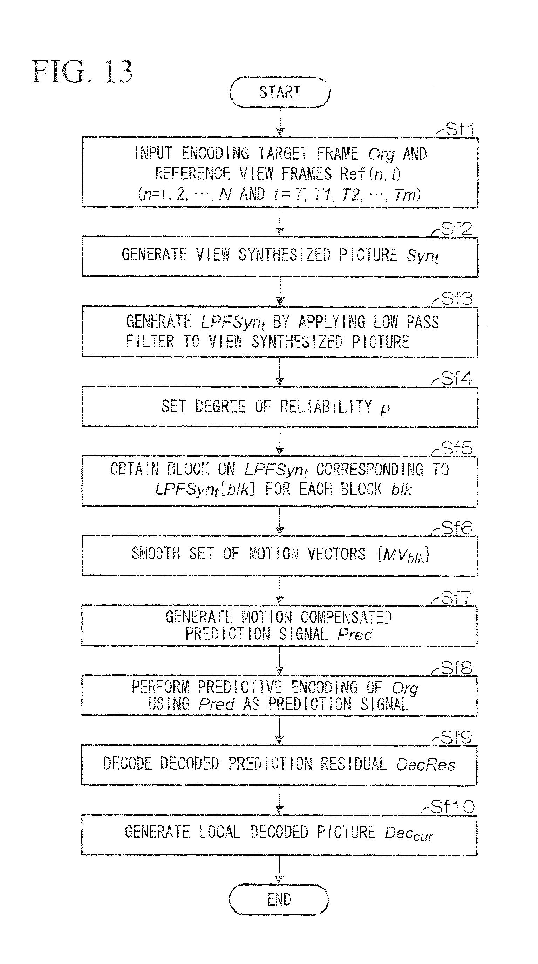

FIG. 13 is a flowchart describing an operation of the multiview video encoding apparatus 600 in the sixth embodiment. A process to be executed by the multiview video encoding apparatus 600 in the sixth embodiment will be described in detail based on this flowchart.

First, an encoding target frame *Org* is input by the encoding target frame input unit 601 and stored in the encoding target picture memory 602 (step Sf1). In addition, a reference view frame *Ref(n, t)* (*n*=1, 2, ..., *N*) taken at a reference view is input by the reference view frame input unit 603, and stored in the reference view picture memory 604 (step Sf1). Here, the input reference view frame is assumed to be obtained by decoding an already encoded picture. This is to suppress encoding noise such as drift from being generated, by using the same information as information obtained at a decoding apparatus. However, when the generation of the encoding noise is allowed, an original picture before encoding may be input. It is to be noted that *n* is an index indicating a reference view and *N* is the number of available reference views. In addition, *t* is an index indicating a photographed time of a frame, and it denotes any one of a photographed time (*T*) of the encoding target frame *Org* and photographed times (*T1, T2, ..., and Tm)* of reference frames. Here, *m* denotes the number of the reference frames.

Next, the view synthesis unit 605 synthesizes a picture taken at the same view as the encoding target frame for each photographed time using information of the reference view frame (step Sf2). This process is similar to step Sa2 of the first embodiment. However, here, view synthesized pictures $Syn_t$ are synthesized for frames of the times *T, T1, T2, ..., and Tm.*

When the synthesis of the view synthesized pictures $Syn_t$ ends, the low pass filter unit 606 applies a low pass filter to the view synthesized pictures to generate noise-reduced view synthesized pictures $LPFSyn_t$, which are stored in the view synthesized picture memory 607 (step Sf3). It is to be noted that although any low pass filter may be used, a representative one is an average filter. The average filter is a filter which determines the average value of input picture signals of neighboring pixels as an output pixel signal of a pixel.

Next, the degree of reliability setting unit 608 generates a degree of reliability $\rho$ indicating the certainty that synthesis for each pixel of a view synthesized picture was able to be realized (step Sf4). This process is the same as step Sa3 of the first embodiment.

Similar to the first embodiment, if a corresponding point search, a stereo method, or depth estimation is performed when a view synthesized picture is generated, part of a process of obtaining corresponding point information or depth information may be the same as part of calculation of degrees of reliability. In such cases, it is possible to reduce the amount of computation by simultaneously performing the generation of the view synthesized picture and the calculation of the degrees of reliability.

When the calculation of the degrees of reliability ends, the corresponding region search unit 609 divides the encoding target frame into blocks, and performs a corresponding region search for each region (step Sf5). Hereinafter, an index of a divided block is denoted by *blk.* The corresponding region search process (step Sf5) is similar to step Sa5 of the first embodiment, except that different frames are used. That is, it is a process of obtaining a pair of *(best_vec, best_t)* represented by Equation (9) using a matching cost in which *Syn* is replaced with $LPFSyn_T$ and *Dec* is replaced with *LPFSyn* in Equations (5) to (8). However, in the present embodiment, a search range of *t* is *T1* to *Tm*.

When motion vectors of all the blocks are obtained, the motion vector smoothing unit 610 smoothes a set of the obtained motion vectors $\{MV_{blk}\}$ so as to increase a spatial correlation (step Sf6). This process is the same as step Se8 of the fifth embodiment. However, when there are a plurality of reference frames, a time and a temporal direction when the motion of an object represented by a motion vector has occurred varies depending on a selected reference frame. The temporal direction of the motion indicates whether the motion is a past motion or a future motion relative to the encoding target frame serving as an origin. Therefore, when an average value process or a median value process is performed, it is necessary to perform the calculation using only motion vectors associated with the same reference frame. That is, in the case of an average filter process, the average value is calculated using only motion vectors of neighboring blocks that are associated with the same reference frame. In an example of a vector median filter, it is necessary to define a set of motion vectors X as a set of vectors that use the same reference frame as a motion vector $MV_{blk}$ among motion vectors of nearby blocks.

When the smoothing of the motion vectors ends, the motion compensated prediction unit 611 generates a motion compensated prediction signal *Pred* based on the obtained motion vectors (step Sf7). This process is the same as step Sa6 of the first embodiment. It is to be noted that because the motion vectors of all the blocks have been obtained, a motion compensated prediction signal for the entire frame is generated.

When the motion compensated prediction signal is obtained, the picture encoding unit 612 performs predictive encoding of the encoding target frame *Org* using the motion compensated prediction signal *Pred.* Specifically, a residual signal *Res* represented by the difference between the encoding target frame *Org* and the motion compensated prediction signal *Pred* is obtained and encoded (step Sf8). Any method for encoding the residual signal may be used. For example, in H.264 disclosed in Non-Patent Document 1, the encoding is performed by sequentially applying a frequency transform such as DCT, quantization, binarization, and entropy encoding. Data of this encoding result becomes an output of the multiview video encoding apparatus 600 in the sixth embodiment.

The picture decoding unit 613 performs decoding on data of the encoding result for use in prediction when subsequent frames are encoded. In decoding, first, the prediction residual signal that has been encoded is decoded (step Sf9), and the motion compensated prediction signal *Pred* is added to the obtained decoded prediction residual signal *DecRes* to generate a local decoded picture $Dec_{cur}$ (step Sf10). The obtained local decoded picture is stored in the decoded picture memory 614. It is to be noted that a method for performing decoding on encoded data obtained by a technique used in encoding is used for decoding. In the case of H.264, the decoded prediction residual signal is obtained by sequentially applying processes of entropy decoding, inverse binarization, inverse quantization, and an inverse frequency transform such as an IDCT.

It is to be noted that the encoding process and the decoding process may be performed for the entire frame, or they may be performed for each block as in H.264. When these processes are performed for each block, it is possible to reduce the amount of a temporary memory for storing a motion compensated prediction signal by iterating steps Sf7, Sf8, Sf9, and Sf10 for each block.

The present embodiment is different from the above-described first to fourth embodiments in that a reference frame itself is not used for obtaining a corresponding region on the reference frame, but the corresponding region is obtained using a view synthesized picture generated for the reference frame. Because the view synthesized picture *Syn* and the decoded picture *Dec* are regarded as substantially identical when a view synthesis process can be performed with high accuracy, the advantageous effect of the present embodiment is equally obtained even when the view synthesized picture *Syn* is used.

In this case, it is necessary to input a reference view frame taken at the same time as a reference frame and generate and store a view synthesized picture for the reference frame. When the encoding and decoding processes in the present embodiment are continuously applied to a plurality of frames, it is possible to prevent a view synthesized picture for the reference frame from being synthesized for each encoding target frame, by continuously storing the view synthesized picture in the view synthesized picture memory while a frame that has been processed is stored in the decoded picture memory.

It is to be noted that because the processed frame stored in the decoded picture memory is not required in the corresponding region search when the view synthesized picture corresponding to the reference frame is used, it is not necessary to perform the corresponding region search process in synchronization with the encoding process or the decoding process. As a result, an advantageous effect can be obtained that parallel computation or the like can be performed and the entire computation time can be reduced.

G. Seventh Embodiment

Next, a seventh embodiment of the present invention will be described.

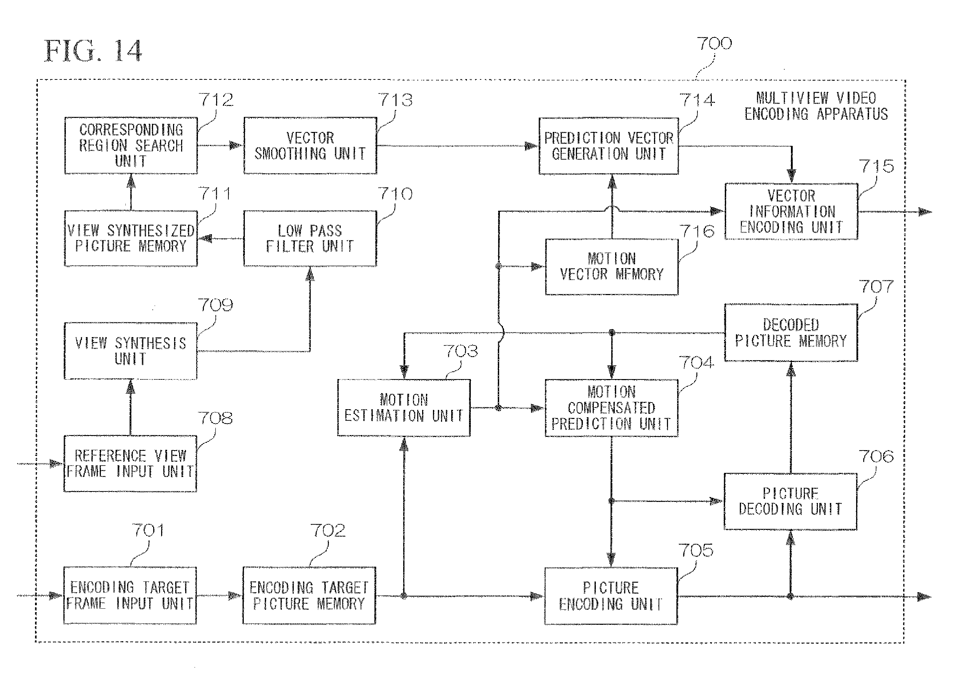

FIG. 14 is a block diagram illustrating a configuration of a multiview video encoding apparatus in the seventh embodiment. As illustrated in FIG. 7, the multiview video encoding apparatus 700 is provided with an encoding target frame input unit 701, an encoding target picture memory 702, a motion estimation unit 703, a motion compensated prediction unit 704, a picture encoding unit 705, a picture decoding unit 706, a decoded picture memory 707, a reference view frame input unit 708, a view synthesis unit 709, a low pass filter unit 710, a view synthesized picture memory 711, a corresponding region search unit 712, a vector smoothing unit 713, a prediction vector generation unit 714, a vector information encoding unit 715, and a motion vector memory 716.

The encoding target frame input unit 701 inputs a video frame serving as an encoding target. The encoding target picture memory 702 stores the input encoding target frame. The motion estimation unit 703 estimates a motion between the encoding target frame and a reference frame for each unit block for encoding of the encoding target frame. The motion compensated prediction unit 704 generates a motion compensated prediction picture based on the result of motion estimation. The picture encoding unit 705 receives the motion compensated prediction picture, performs predictive encoding of the encoding target frame, and outputs encoded data. The picture decoding unit 706 receives the motion compensated prediction picture and the encoded data, decodes the encoding target frame, and outputs a decoded picture. The decoded picture memory 707 stores the decoded picture of the encoding target frame.

The reference view frame input unit 708 inputs a video frame for a view different from that of the encoding target frame. The view synthesis unit 709 generates view synthesized pictures for the encoding target frame and reference frames using a reference view frame. The low pass filter unit 710 reduces noise included in a view synthesized video by applying a low pass filter thereto. The view synthesized picture memory 711 stores a view synthesized picture subjected to the low pass filter process.

The corresponding region search unit 712 searches for a vector representing a corresponding block on an already encoded frame which serves as the reference frame of motion compensated prediction and has been taken at the same view as the encoding target frame for each unit block for encoding of the view synthesized picture, using the view synthesized picture subjected to the low pass filter process generated for the reference frame. The vector smoothing unit 713 spatially smoothes the obtained vector to generate an estimated vector so as to increase the spatial correlation of the vector.

The prediction vector generation unit 714 generates a prediction vector for a motion vector of the encoding target block from the estimated vector and motion vectors used for motion compensation in neighboring blocks. The vector information encoding unit 715 performs predictive encoding of the motion vector using the generated prediction vector. The motion vector memory 716 stores the motion vector.

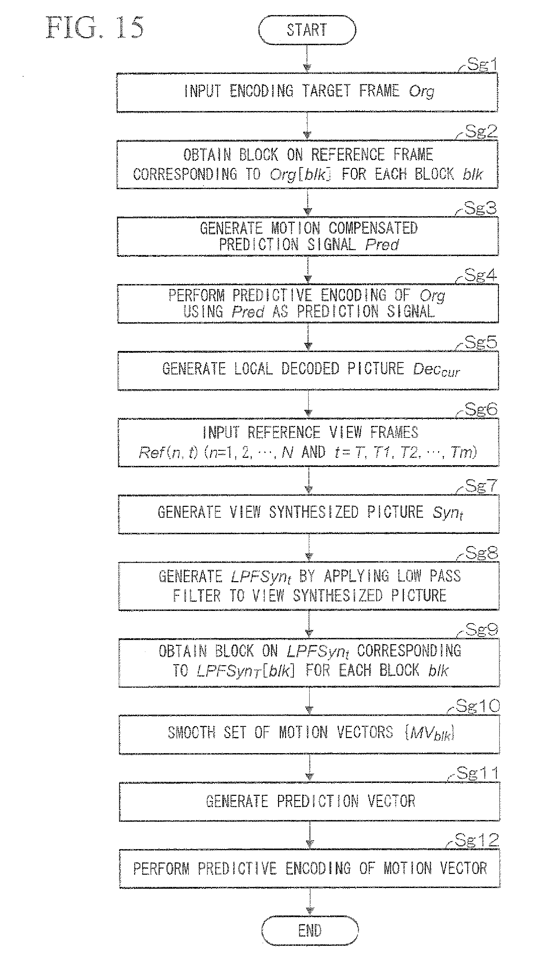

FIG. 15 is a flowchart describing an operation of the multiview video encoding apparatus 700 in the seventh embodiment. A process to be executed by the multiview video encoding apparatus 700 in the seventh embodiment will be described in detail based on this flowchart.

First, an encoding target frame *Org* is input by the encoding target frame input unit 701 and stored in the encoding target picture memory 702 (step Sg1). Next, the encoding target frame is divided into blocks, and a video signal of the encoding target frame is encoded while motion compensated prediction is performed for each region (steps Sg2 to Sg5). Hereinafter, an index of an encoding target block is denoted by *blk*.

In the encoding process, first, the motion estimation unit 703 finds a block on a reference frame corresponding to an encoding target block *Org*[*blk*] for each block *blk* (step Sg2). This process is called motion prediction, and is the same as step Sb4 of the second embodiment. A two-dimensional vector that represents the offset from the block *blk* for designating a corresponding block is called a motion vector, which is denoted by *mv* in the seventh embodiment. The motion vector *mv* is stored in the motion vector memory 716 for use in processing for subsequent blocks. It is to be noted that when the reference frame is selected for each block as in H.264, information indicating the selected reference frame is also stored in the motion vector memory 716.

When the motion estimation ends, the motion compensated prediction unit 704 generates a motion compensated prediction signal *Pred* for the encoding target frame *Org* (step Sg3). This process is the same as step Sb5 of the second embodiment. When the motion compensated prediction signal is obtained, the picture encoding unit 705 performs predictive encoding of the encoding target block using the motion compensated prediction signal *Pred* (step Sg4). This process is the same as step Sb6 of the second embodiment. Data of this encoding result becomes part of an output of the multiview video encoding apparatus 700 in the seventh embodiment. The picture decoding unit 706 performs decoding on the data of the encoding result for use in prediction when subsequent frames are encoded (step Sg5). This process is the same as the process of steps Sb7 and Sb8 of the second embodiment. The decoded local decoded picture $Dec_{cur}$ is stored in the decoded picture memory 707.

It is to be noted that although the flowchart illustrated in FIG. 15 shows an example in which the process of steps Sg3 to Sg5 is performed for each frame, steps Sg3 to Sg5 may be iteratively executed for each block. In this case, because it is sufficient that the motion compensated prediction signal be retained for each block, it is possible to reduce the amount of a memory to be temporarily used.

When the encoding of a picture signal of the encoding target frame ends, the motion vector *mv* for generating the motion compensated prediction signal used in the encoding is encoded. To this end, first, a reference view frame *Ref*(*n, t*) (*n*=1, 2, ..., *N*) taken at a reference view is input by the reference view frame input unit 708 (step Sg6). Here, the input reference view frame is assumed to be obtained by decoding an already encoded picture. This is to prevent encoding noise such as drift from being generated, by using the same information as information obtained at a decoding apparatus. However, when the generation of the encoding noise is allowed, an original picture before encoding may be input. It is to be noted that *n* is an index indicating a reference view and *N* is the number of available reference views. In addition, *t* is an index indicating a photographed time of a frame, and it denotes any one of a photographed time (*T*) of the encoding target frame *Org* and photographed times (*T1, T2*, ..., and *Tm*) of the reference frames. Here, *m* denotes the number of the reference frames.

Next, the view synthesis unit 709 synthesizes a picture taken at the same view as the encoding target frame for each photographed time using information of the reference view frame (step Sg7). This process is the same as step Sf2 of the sixth embodiment.

When the synthesis of the view synthesized pictures $Syn_t$ ends, the low pass filter unit 710 applies a low pass filter to the view synthesized pictures to generate noise-reduced view synthesized pictures $LPFSyn_t$, which are stored in the view synthesized picture memory 711 (step Sg8). This process is the same as step Sf3 of the sixth embodiment.

When the low pass filter process ends, the corresponding region search unit 712 divides the view synthesized picture $LPFSyn_T$ generated for the encoding target frame into blocks, and performs a corresponding region search for each region (step Sg9). It is to be noted that when the view synthesized picture $LPFSyn_T$ is divided into the blocks, the division is performed using the same block position and size as those of the blocks for which the motion compensated prediction is performed in step Sg3. The process here is a process of obtaining a pair of *(best_vec, best_t)* satisfying Equation (9) using a matching cost in which *Syn* is replaced with $LPFSyn_T$ and *Dec* is replaced with *LPFSyn* in Equations (5) to (8) for each divided block. However, in the present embodiment, *best_vec* is obtained for each of *T1* to *Tm* as *t*. That is, a set of *best_vec* is obtained for each block. It is to be noted that although the present embodiment does not use the degrees of reliability of view synthesis, the degrees of reliability may be calculated and used as described in the sixth embodiment.

When motion vectors are obtained for all the blocks, the motion vector smoothing unit 713 generates a set of estimated vectors {*vec*(*blk, t*)} by smoothing the set of the obtained motion vectors {$MV_{blk}$} so as to increase a spatial correlation (step Sg10). This process is the same as step Se8 of the fifth embodiment. It is to be noted that the smoothing process is performed for each of the photographed times of the reference frames.

When the set of the estimated vectors is obtained, the prediction vector generation unit 714 generates a prediction vector *pmv* for the motion vector mv of the encoding target block using the estimated vectors of a processing block and motion vectors used in blocks neighboring the processing block stored in the motion vector memory 716 for each block (step Sg11). It is to be noted that this process is similar to step Sb11 of the second embodiment. However, the present embodiment selects the optimum frame for each block from a plurality of reference frames and generates a motion vector, and thus a prediction vector generation method considering a reference frame of each vector may be used.

The following method may be used as the prediction vector generation method considering a reference frame of a vector. First, a reference frame of a motion vector of a processing block is compared with reference frames of motion vectors used in blocks neighboring the processing block, and motion vectors associated with reference frames that match the reference frame of the motion vector of the processing block among the motion vectors used in the neighboring blocks are set as prediction vector candidates. If no prediction vector candidate has been found, an estimated vector of the processing block that is associated with the same reference frame is determined as a prediction vector. If the prediction vector candidates have been found, a vector closest to the estimated vector of the processing block that is associated with the same reference frame among the candidates is determined as a prediction vector. In this case, a vector separated by a pre-defined distance or more from the estimated vector of the processing block that is associated with the same reference frame may be excluded. It is to be noted that if no prediction vector candidate is present as the result of the exclusion process, the estimated vector of the processing block that is associated with the same reference frame is determined as a prediction vector.

In addition, the following method may be used as the prediction vector generation method considering a reference frame of a vector. First, a set of blocks associated with the same reference frame is defined in nearby blocks for the processing block. If this set is a null set, an estimated vector of the processing block that is associated with the same reference frame is determined as a prediction vector. If this set is not a null set, the degree of similarity between an estimated vector of each block included in the set that is associated with the same reference frame and the estimated vector of the processing block that is associated with the same reference frame is calculated for each block included in the set. Then, a motion vector of a block having the highest degree of similarity is determined as a prediction vector. It is to be noted that if the degrees of similarity for all the blocks are less than a constant value, the estimated vector of the processing block that is associated with the same reference frame may be determined as a prediction vector. In addition, if there are a plurality of blocks having the degrees of similarity greater than or equal to the constant value, the average vector of motion vectors corresponding to the blocks may be determined as a prediction vector.

When the generation of the prediction vector ends, the vector information encoding unit 715 performs predictive encoding of the motion vector mv for each block (step Sg12). This process is the same as step Sb12 of the second embodiment. The result of the encoding becomes one of outputs of the multiview video encoding apparatus 700.

The flowchart illustrated in FIG. 15 shows an example in which steps Sg11 and Sg12 are performed for each frame. In this case, when the prediction vector is generated in step Sg11, in consideration of the order of encoding in step Sg12, a limitation must be made so that only encoded blocks are used as neighboring blocks. This is to avoid a situation in which decoding cannot be performed because information that has not yet been decoded is required for the decoding. It is to be noted that steps Sg11 and Sg12 may be alternately performed for each block. In this case, it is possible to identify an encoded neighboring region without consideration of the order of encoding. In addition, it is sufficient that the prediction vector be retained for each block, and hence it is possible to reduce the amount of a memory to be temporarily used.

In addition, in the present embodiment, the vector is generated for each reference frame in step Sg9. However, the vector may be generated only for a reference frame associated with a motion vector of a processing block, or the vector may be generated only for a reference frame associated with a motion vector of any one of the processing block and nearby blocks of the processing block. By doing so, it is possible to reduce the computation cost of step Sg9. However, in this case, the vector smoothing process in step Sg10 must be performed using only motion vectors associated with the same reference frame as in step Sf6 of the sixth embodiment.

H. Eighth Embodiment

Next, an eighth embodiment of the present invention will be described.

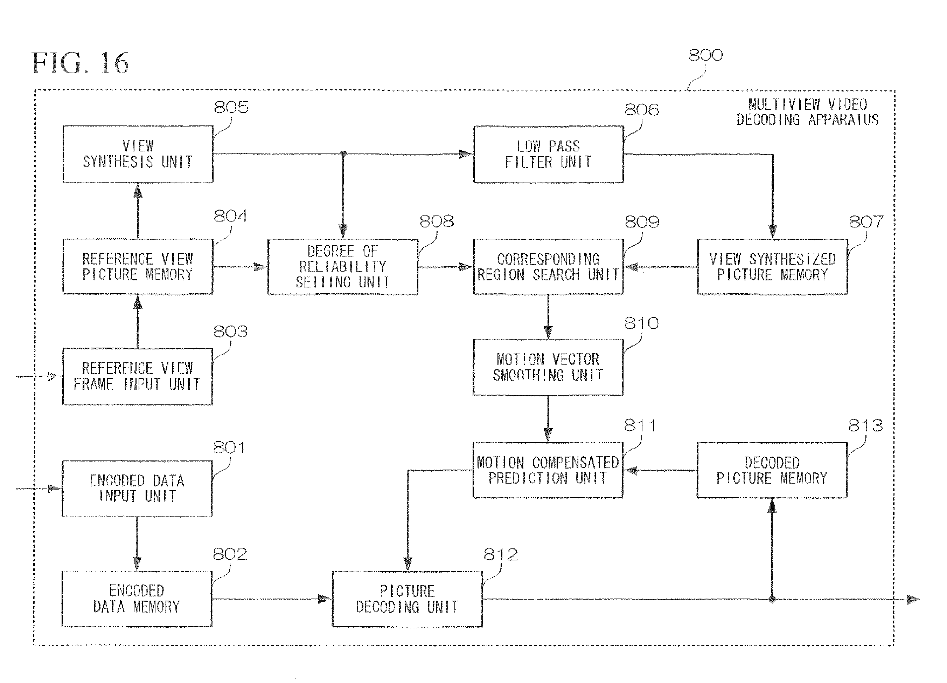

FIG. 16 is a block diagram illustrating a configuration of a multiview video decoding apparatus in the eighth embodiment. As illustrated in FIG. 16, the multiview video decoding apparatus 800 is provided with an encoded data input unit 801, an encoded data memory 802, a reference view frame input unit 803, a reference view picture memory 804, a view synthesis unit 805, a low pass filter unit 806, a view synthesized picture memory 807, a degree of reliability setting unit 808, a corresponding region search unit 809, a motion vector smoothing unit 810, a motion compensated prediction unit 811, a picture decoding unit 812, and a decoded picture memory 813.

The encoded data input unit 801 inputs encoded data of a video frame serving as a decoding target. The encoded data memory 802 stores the input encoded data. The reference view frame input unit 803 inputs a video frame for a view different from that of the decoding target frame. The reference view picture memory 804 stores the input reference view frame. The view synthesis unit 805 generates view synthesized pictures for the decoding target frame and a reference frame using the reference view frame.

The low pass filter unit 806 reduces noise included in a view synthesized video by applying a low pass filter thereto. The view synthesized picture memory 807 stores a view synthesized picture subjected to the low pass filer process. The degree of reliability setting unit 808 sets a degree of reliability for each pixel of the generated view synthesized picture. The corresponding region search unit 809 searches for a motion vector representing a corresponding block on an already decoded frame which serves as the reference frame of motion compensated prediction and has been taken at the same view as the decoding target frame for each unit block for decoding of the view synthesized pictures, using the view synthesized picture subjected to the low pass filer process generated for the reference frame and the degrees of reliability. That is, by assigning a weight to a matching cost when a corresponding region is searched for based on the degrees of reliability, an accurately synthesized pixel is regarded as important, and highly accurate motion vector estimation is realized, without being affected by an error in view synthesis. The motion vector smoothing unit 810 spatially smoothes the motion vector so as to increase the spatial correlation of the motion vector.

The motion compensated prediction unit 811 generates a motion compensated prediction picture using the reference frame based on the determined corresponding block. The picture decoding unit 812 receives the motion compensated prediction picture and the encoded data, decodes the decoding target frame, and outputs a decoded picture. The decoded picture memory 813 stores the decoded picture of the decoding target frame.

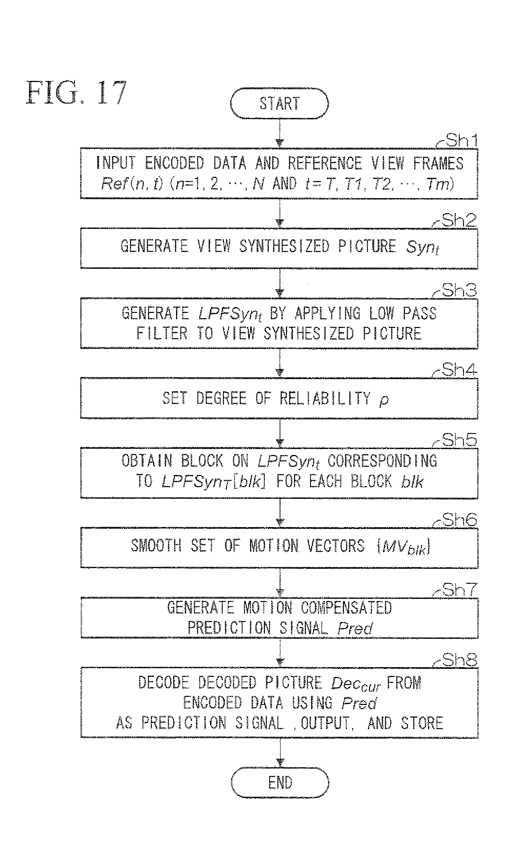

FIG. 17 is a flowchart describing an operation of the multiview video decoding apparatus 800 in the eighth embodiment. A process to be executed by the multiview video decoding apparatus 800 in the eighth embodiment will be described in detail based on this flowchart.

First, encoded data of a decoding target frame is input by the encoded data input unit 801 and stored in the encoded data memory 802 (step Sh1). In addition, a reference view frame $Ref(n, t)$ ($n$=1, 2, ..., $N$) taken at a reference view is input by the reference view frame input unit 803, and stored in the reference view picture memory 804 (step Sh1). Here, n is an index indicating a reference view and $N$ is the number of available reference views. In addition, $t$ is an index indicating a photographed time of a frame, and denotes any one of a photographed time ($T$) of the decoding target frame $Dec_{cur}$ and photographed times ($T1, T2, ..., $ and $Tm$) of reference frames. Here, $m$ denotes the number of the reference frames.

Next, the view synthesis unit 805 synthesizes a picture taken at the same view as the decoding target frame for each photographed time using information of the reference view frame (step Sh2). This process is the same as step Sf2 of the sixth embodiment. That is, here, view synthesized pictures $Syn_t$ are synthesized for frames of the times $T, T1, T2, ...,$ and $Tm$.

When the synthesis of the view synthesized pictures $Syn_t$ ends, the low pass filter unit 806 applies a low pass filter to the view synthesized pictures, and the view synthesized picture memory 807 stores noise-reduced view synthesized pictures $LPFSyn_t$ (step Sh3). This process is the same as step Sf3 of the sixth embodiment. It is to be noted that although any low pass filter may be used, a representative one is an average filter. The average filter is a filter which determines the average value of input picture signals of neighboring pixels as an output pixel signal of a pixel.

Next, the degree of reliability setting unit 808 generates a degree of reliability p indicating the certainty that synthesis for each pixel of a view synthesized picture was able to be realized (step Sh4). This process is the same as step Sf4 of the sixth embodiment.

Similar to the sixth embodiment, if a corresponding point search, a stereo method, or depth estimation is performed when a view synthesized picture is generated, part of a process of obtaining corresponding point information or depth information may be the same as part of calculation of degrees of reliability. In such cases, it is possible to reduce the amount of computation by simultaneously performing the generation of the view synthesized picture and the calculation of the degrees of reliability.

When the calculation of the degrees of reliability ends, the corresponding region search unit 809 performs a corresponding region search for each pre-defined block (step Sh5). Hereinafter, an index of a block is denoted by $blk$. This process is the same as step Sf5 of the sixth embodiment.

When motion vectors of all the blocks are obtained, the motion vector smoothing unit 810 smoothes a set of the obtained motion vectors $\{MV_{blk}\}$ so as to increase a spatial correlation (step Sh6). This process is the same as step Sf6 of the sixth embodiment.

When the smoothing of the motion vectors ends, the motion compensated prediction unit 811 generates a motion compensated prediction signal $Pred$ based on the obtained motion vectors (step Sh7). This process is the same as step Sf7 of the sixth embodiment.

When the motion compensated prediction signal is obtained, the picture decoding unit 812 decodes the decoding target frame (decode picture) $Dec_{cur}$ from the input encoded data using the motion compensated prediction signal $Pred$ (step Sh8). This process is the same as a combination of steps Sf9 and Sf10 of the sixth embodiment, and the decoding is performed by a process inverse to a process performed in a method used for encoding. The generated decoded picture becomes an output of the multiview video decoding apparatus 800, and is stored in the decoded picture memory 813 for use in prediction for subsequent frames.

It is to be noted that the decoding process may be performed for the entire frame, or it may be performed for each block as in H.264. If the decoding process is performed for each block, it is possible to reduce the amount of a temporary memory for storing a motion compensated prediction signal by alternately performing steps Sh7 and Sh8 for each block.

I. Ninth Embodiment

Next, a ninth embodiment of the present invention will be described.

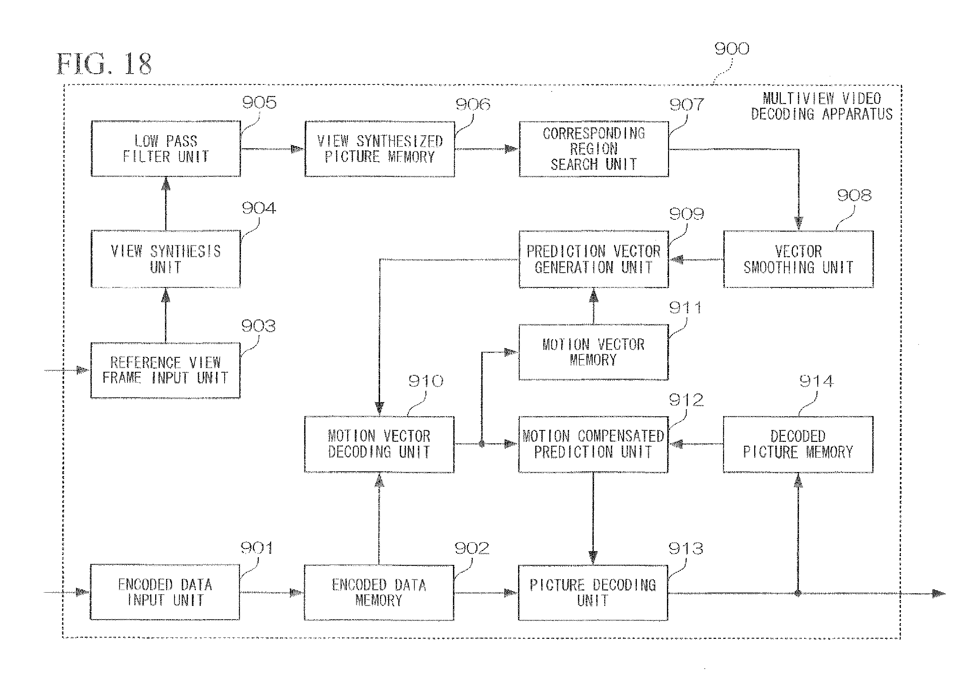

FIG. 18 is a block diagram illustrating a configuration of a multiview video decoding apparatus in the ninth embodiment. In FIG. 9, the multiview video decoding apparatus 900 is provided with an encoded data input unit 901, an encoded data memory 902, a reference view frame input unit 903, a view synthesis unit 904, a low pass filter unit 905, a view synthesized picture memory 906, a corresponding region search unit 907, a vector smoothing unit 908, a prediction vector generation unit 909, a motion vector decoding unit 910, a motion vector memory 911, a motion compensated prediction unit 912, a picture decoding unit 913, and a decoded picture memory 914.

The encoded data input unit 901 inputs encoded data of a video frame serving as a decoding target. The encoded data memory 902 stores the input encoded data. The reference view frame input unit 903 inputs a video frame for a reference view different from that of the decoding target frame. The view synthesis unit 904 generates view synthesized pictures for the decoding target frame and reference frames using the reference view frame. The low pass filter unit 905 reduces noise included in the view synthesized pictures by applying a low pass filter thereto. The view synthesized picture memory 906 stores a view synthesized picture subjected to the low pass filter process.

The corresponding region search unit 907 searches for a vector representing a corresponding block on an already decoded frame which serves as the reference frame of motion compensated prediction and has been taken at the same view as the decoding target frame for each unit block for decoding of the view synthesized picture, using the view synthesized picture subjected to the low pass filter process generated for the reference frame. The vector smoothing unit 908 spatially smoothes the obtained vector to generate an estimated vector so as to increase the spatial correlation of the vector.

The prediction vector generation unit 909 generates a prediction vector for a motion vector of the decoding target block from the estimated vector and motion vectors used for motion compensation in blocks neighboring the decoding target block. The motion vector decoding unit 910 decodes the motion vector that has been subjected to predictive encoding from the encoded data using the generated prediction vector. The motion vector memory 911 stores the decoded motion vector. The motion compensated prediction unit 912 generates a motion compensated prediction picture based on the decoded motion vector. The picture decoding unit 913 receives the motion compensated prediction picture, decodes a decoding target frame that has been subjected to predictive encoding, and outputs a decoded picture. The decoded picture memory 914 stores the decoded picture.

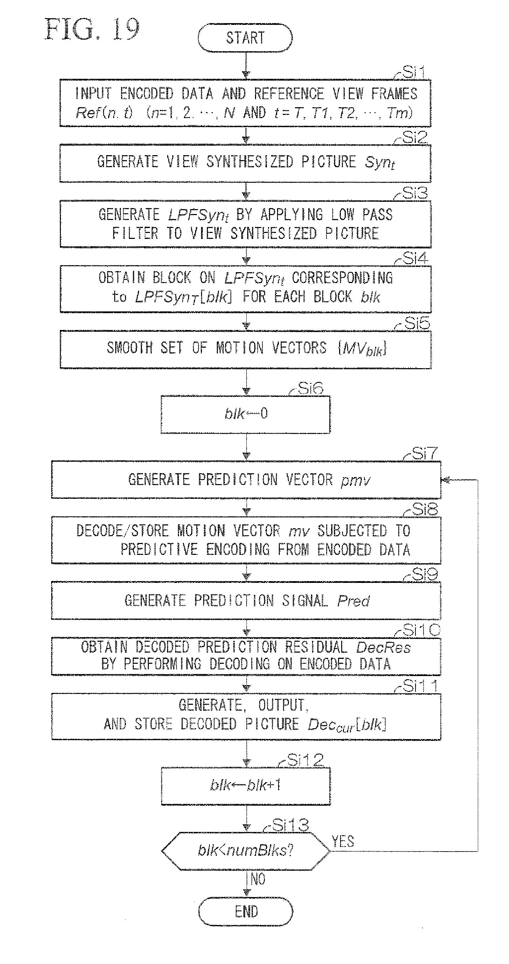

FIG. 19 is a flowchart describing an operation of the multiview video decoding apparatus 900 in the ninth embodiment. A process to be executed by the multiview video decoding apparatus 900 in the ninth embodiment will be described in detail based on this flowchart.

First, encoded data of a decoding target frame is input by the encoded data input unit 901 and stored in the encoded data memory 902 (step Si1). In addition, a reference view frame $Ref(n, t)$ $(n=1, 2, ... , N)$ taken at a reference view is input by the reference view frame input unit 903 (step Si1). Here, $n$ is an index indicating a reference view and $N$ is the number of available reference views. In addition, $t$ is an index indicating a photographed time of a frame, and denotes any one of a photographed time ($T$) of a decoding target frame $Dec_{cur}$ and photographed times ($T1, T2, ...,$ and $Tm$) of reference frames. Here, $m$ denotes the number of the reference frames. It is to be noted that the encoded data includes at least two types of data of a prediction residual of a video signal and a prediction residual of a motion vector used in prediction for video.

Next, the view synthesis unit 904 synthesizes a picture taken at the same view as the decoding target frame for each photographed time using information of the reference view frame (step Si2). This process is the same as step Sg7 of the seventh embodiment.

When the synthesis of the view synthesized pictures $Syn_t$ ends, the low pass filter unit 905 applies a low pass filter to the view synthesized pictures to generate noise-reduced view synthesized pictures $LPFSyn_t$, which are stored in the view synthesized picture memory 906 (step Si3). This process is the same as step Sg8 of the seventh embodiment.

When the low pass filter process ends, the corresponding region search unit 907 divides the view synthesized picture $LPFSyn_T$ generated for the decoding target frame into blocks, and performs a corresponding region search for each region (step Si4). This process is the same as step Sg9 of the seventh embodiment. It is to be noted that although the present embodiment does not use the degrees of reliability of the view synthesis, the degrees of reliability may be calculated and used as in the sixth embodiment.

When vectors are obtained for all the blocks, the motion vector smoothing unit 908 generates a set of estimated vectors {$vec(blk, t)$} by smoothing the set of the obtained vectors {$MV_{blk}$} so as to increase a spatial correlation (step Si5). This process is the same as step Sg10 of the seventh embodiment. It is to be noted that the smoothing process is performed for each of the photographed times of the reference frames.

When the set of the estimated vectors is obtained, a video signal of the decoding target frame and a motion vector are decoded for each pre-defined block (steps Si6 to Si13). That is, when an index of a decoding target block is denoted by $blk$ and the total number of decoding target blocks is denoted by $numBlks$, after $blk$ is initialized to 0 (step Si6), the following process (steps Si7 to Si11) is iterated until $blk$ reaches $numBlks$ (step Si13) while incrementing $blk$ by 1 (step Si12).

In the process iterated for each decoding target block, first, the prediction vector generation unit 909 generates a prediction vector $pmv$ for the motion vector $mv$ of the decoding target block using the estimated vectors and motion vectors used in blocks neighboring the decoding target block stored in the motion vector memory 911 (step Si7). This process is similar to step Sg11 of the seventh embodiment. However, in the present embodiment, a prediction vector is generated only for a block $blk$, rather than the entire frame. The same method as the method performed in encoding is used to generate the prediction vector.

When the generation of the prediction vector ends, the motion vector decoding unit 910 decodes a motion vector $mv$ of the decoding target block $blk$ from the encoded data (step Si8). The motion vector $mv$ has been subjected to predictive encoding using the prediction vector $pmv$, and the motion vector $mv$ is obtained by decoding a prediction residual vector $dmv$ from the encoded data and adding the prediction vector $pmv$ to the prediction residual vector $dmv$. The decoded motion vector $mv$ is sent to the motion compensated prediction unit 912, stored in the motion vector memory 911, and used when a motion vector of a subsequent decoding target block is decoded.

When the motion vector for the decoding target block is obtained, the motion compensated prediction unit 912 generates a motion compensated prediction signal $Pred[blk]$ for the decoding target block (step Si9). This process is the same as step Sg3 of the seventh embodiment.

When the motion compensated prediction signal is obtained, the picture decoding unit 913 decodes a decoding target frame subjected to predictive encoding. Specifically, a prediction residual signal $DecRes$ is decoded from the encoded data (step Si10), and a decoded picture $Dec_{cur}[blk]$ for the block $blk$ is generated by adding the motion compensated prediction signal $Pred$ to the obtained decoded prediction residual $DecRes$ (step Si11). The generated decoded picture becomes an output of the multiview video decoding apparatus 900, and is stored in the decoded picture memory 914 for use in prediction for subsequent frames.

In the above-described fifth to ninth embodiments, the low pass filter process and the motion vector smoothing process for the view synthesized pictures prevent the accuracy of the corresponding region search from being deteriorated due to noise such as film grain and encoding distortion in the reference view frame, synthesis distortion in view synthesis, and the like. However, when the amount of the noise is small, it is possible to obtain a corresponding region with high accuracy without performing the low pass filter process and/or the motion vector smoothing process. In such cases, it is possible to reduce the amount of total computation by omitting the low pass filter process and/or the motion vector smoothing process of the above-described fifth to ninth embodiments.

The first to fourth embodiments and the sixth to ninth embodiments described above describe the case in which a unit block for encoding and a unit block for decoding have the same size as a motion compensated prediction block. However, it is possible to easily infer an extension to the case in which a unit block for encoding and/or a unit block for decoding has a size different from that of a motion compensated prediction block as in H.264.

Although the above-described first to ninth embodiments describe motion compensated prediction, it is possible to apply an idea of the present invention to all inter-frame predictions. That is, as long as a reference frame is a frame taken by another camera, disparity is estimated by a corresponding region search. In addition, as long as a reference frame is a frame taken by a different camera at a different time, a vector including both motion and disparity is estimated. Furthermore, it is also applicable to the case in which a reference region within a frame is determined as in fractal encoding.

In addition, although the first to fourth embodiments and the sixth to ninth embodiments described above describe that all the blocks are encoded using inter-frame prediction, encoding may be performed using a different prediction scheme for each block as in H.264. In this case, the present invention is applied to only blocks using inter-frame prediction. Blocks for which inter-frame prediction is performed can be encoded while switching use of a conventional scheme and use of a scheme of the present invention. In this case, it is necessary to transmit information indicating a used scheme to a decoding side using a certain method.

The above-described process can also be realized by a computer and a software program. In addition, it is also possible to provide the program by recording the program on a computer-readable recording medium and to provide the program over a network.

In addition, although the above-described embodiments mainly describe a multiview video encoding apparatus and a multiview video decoding apparatus, a multiview video encoding method and a multiview video decoding method can be realized by steps corresponding to operations of respective units of the multiview video encoding apparatus and the multiview video decoding apparatus.

Although the embodiments of the present invention have been described above with reference to the drawings, these embodiments are exemplary of the present invention, and it is apparent that the present invention is not limited to these embodiments. Therefore, additions, omissions, substitutions, and other modifications of constituent elements can be made without departing from the spirit and scope of the present invention.

INDUSTRIAL APPLICABILITY

The present invention is used, for example, for encoding and decoding multiview moving pictures. In the present invention, a motion vector can be accurately estimated even in a situation in which a processing picture cannot be obtained. In addition, by using the temporal correlation in prediction of a video signal, an inter-camera correlation and a temporal correlation are used simultaneously, and efficient multiview video encoding can be implemented.

Description of Reference Symbols

| | |
|---|---|
| 100, 200 | Multiview video encoding apparatus |
| 101, 201 | Encoding target frame input unit |
| 102, 202 | Encoding target picture memory |
| 103, 203 | Reference view frame input unit |
| 104 | Reference view picture memory |
| 105, 204 | View synthesis unit |
| 106, 205 | View synthesized picture memory |
| 107 | Degree of reliability setting unit |
| 108,211 | Corresponding region search unit |
| 109, 207 | Motion compensated prediction unit |
| 110 | Prediction residual encoding unit |
| 111 | Prediction residual decoding unit |
| 112,210 | Decoded picture memory |
| 113 | Prediction residual calculation unit |
| 114 | Decoded picture calculation unit |
| 206 | Motion estimation unit |
| 208 | Picture encoding unit |
| 209 | Picture decoding unit |
| 212 | Prediction vector generation unit |
| 213 | Vector information encoding unit |
| 214 | Motion vector memory |
| 300, 400 | Multiview video decoding apparatus |
| 301,401 | Encoded data input unit |
| 302, 402 | Encoded data memory |
| 303, 403 | Reference view frame input unit |
| 304 | Reference view picture memory |
| 305, 404 | View synthesis unit |
| 306, 405 | View synthesized picture memory |
| 307 | Degree of reliability setting unit |
| 308, 406 | Corresponding region search unit |
| 309, 410 | Motion compensated prediction unit |
| 310 | Prediction residual decoding unit |
| 311, 412 | Decoded picture memory |
| 312 | Decoded picture calculation unit |
| 407 | Prediction vector generation unit |
| 408 | Motion vector decoding unit |
| 409 | Motion vector memory |
| 411 | Picture decoding unit |
| 500, 500a | Motion vector estimation apparatus |
| 600, 700 | Multiview video encoding apparatus |

800, 900    Multiview video decoding apparatus

**Claims**

1.  A motion vector estimation method comprising:

    a view synthesized picture generation step of generating, from a reference camera video taken by a camera different from a processing camera that has taken a processing picture included in a multiview video, a view synthesized picture at a time when the processing picture has been taken based on the same setting as that of the processing camera; and
    a corresponding region estimation step of estimating a motion vector by searching for a corresponding region in a reference picture taken by the processing camera using a picture signal on the view synthesized picture corresponding to a processing region on the processing picture without using the processing picture.

2.  The motion vector estimation method according to claim 1, further comprising a degree of reliability setting step of setting a degree of reliability indicating certainty of the view synthesized picture for each pixel of the view synthesized picture,
    wherein in the corresponding region estimation step, a weight is assigned to a matching cost when the corresponding region is searched for based on the degree of reliability.

3.  A multiview video encoding method for performing predictive encoding of a multiview video, the method comprising:

    a view synthesized picture generation step of generating, from an already encoded reference view frame taken simultaneously with an encoding target frame at a reference view different from an encoding target view of the multiview video, a view synthesized picture at the encoding target view;
    a motion vector estimation step of estimating a motion vector by searching for a corresponding region on an already encoded reference frame at the encoding target view for each unit block for encoding of the view synthesized picture;
    a motion compensated prediction picture generation step of generating a motion compensated prediction picture for the encoding target frame using the estimated motion vector and the reference frame; and
    a residual encoding step of encoding a difference signal between the encoding target frame and the motion compensated prediction picture.

4.  The multiview video encoding method according to claim 3, further comprising a degree of reliability setting step of setting a degree of reliability indicating certainty of the view synthesized picture for each pixel of the view synthesized picture,
    wherein in the motion vector estimation step, a weight is assigned to a matching cost of each pixel when the corresponding region is searched for based on the degree of reliability.

5.  The multiview video encoding method according to claim 3 or 4, further comprising:

    a motion search step of generating an optimum motion vector by searching for the corresponding region between the reference frame and each unit block for encoding of the encoding target frame; and
    a difference vector encoding step of encoding a difference vector between the motion vector and the optimum motion vector,
    wherein in the motion compensated prediction picture generation step, the motion compensated prediction picture is generated using the optimum motion vector and the reference frame.

6.  The multiview video encoding method according to claim 5, further comprising a prediction vector generation step of generating a prediction vector using the motion vector and a group of optimum motion vectors used in regions neighboring an encoding target region,
    wherein in the difference vector encoding step, a difference vector between the prediction vector and the optimum motion vector is encoded.

7.  A multiview video decoding method for decoding a video for a view of a multiview video from encoded data, the method comprising:

a view synthesized picture generation step of generating, from a reference view frame taken simultaneously with a decoding target frame at a reference view different from a decoding target view, a view synthesized picture at the decoding target view;

a motion vector estimation step of estimating a motion vector by searching for a corresponding region on an already decoded reference frame at the decoding target view for each unit block for decoding of the view synthesized picture;

a motion compensated prediction picture generation step of generating a motion compensated prediction picture for the decoding target frame using the estimated motion vector and the reference frame; and

a picture decoding step of decoding the decoding target frame that has been subjected to predictive encoding from the encoded data using the motion compensated prediction picture as a prediction signal.

8. The multiview video decoding method according to claim 7, further comprising a degree of reliability setting step of setting a degree of reliability indicating certainty of the view synthesized picture for each pixel of the view synthesized picture,

wherein in the motion vector estimation step, a weight is assigned to a matching cost of each pixel when the corresponding region is searched for based on the degree of reliability.

9. The multiview video decoding method according to claim 7 or 8, further comprising a vector decoding step of decoding an optimum motion vector that has been subjected to predictive encoding from the encoded data using the motion vector as a prediction vector,

wherein in the motion compensated prediction picture generation step, the motion compensated prediction picture is generated using the optimum motion vector and the reference frame.

10. The multiview video decoding method according to claim 9, further comprising a prediction vector generation step of generating an estimated prediction vector using the motion vector and a group of optimum motion vectors used in regions neighboring a decoding target region,

wherein in the vector decoding step, the optimum motion vector is decoded using the estimated prediction vector as the prediction vector.

11. A motion vector estimation apparatus comprising:

a view synthesized picture generation means for generating, from a reference camera video taken by a camera different from a processing camera that has taken a processing picture included in a multiview video, a view synthesized picture at a time when the processing picture has been taken based on the same setting as that of the processing camera; and

a corresponding region estimation means for estimating a motion vector by searching for a corresponding region in a reference picture taken by the processing camera using a picture signal on the view synthesized picture corresponding to a processing region on the processing picture without using the processing picture.

12. The motion vector estimation apparatus according to claim 11, further comprising a degree of reliability setting means for setting a degree of reliability indicating certainty of the view synthesized picture for each pixel of the view synthesized picture,

wherein the corresponding region estimation means assigns a weight to a matching cost when the corresponding region is searched for based on the degree of reliability.

13. A multiview video encoding apparatus for performing predictive encoding of a multiview video, the apparatus comprising:

a view synthesized picture generation means for generating, from an already encoded reference view frame taken simultaneously with an encoding target frame at a reference view different from an encoding target view of the multiview video, a view synthesized picture at the encoding target view;

a motion vector estimation means for estimating a motion vector by searching for a corresponding region on an already encoded reference frame at the encoding target view for each unit block for encoding of the view synthesized picture;

a motion compensated prediction picture generation means for generating a motion compensated prediction picture for the encoding target frame using the estimated motion vector and the reference frame; and

a residual encoding means for encoding a difference signal between the encoding target frame and the motion compensated prediction picture.

14. The multiview video encoding apparatus according to claim 13, further comprising a degree of reliability setting means for setting a degree of reliability indicating certainty of the view synthesized picture for each pixel of the view synthesized picture,

wherein the motion vector estimation means assigns a weight to a matching cost of each pixel when the corresponding region is searched for based on the degree of reliability.

15. A multiview video decoding apparatus for decoding a video for a view of a multiview video from encoded data, the apparatus comprising:

   a view synthesized picture generation means for generating, from a reference view frame taken simultaneously with a decoding target frame at a reference view different from a decoding target view, a view synthesized picture at the decoding target view;

   a motion vector estimation means for estimating a motion vector by searching for a corresponding region on an already decoded reference frame at the decoding target view for each unit block for decoding of the view synthesized picture;

   a motion compensated prediction picture generation means for generating a motion compensated prediction picture for the decoding target frame using the estimated motion vector and the reference frame; and

   a picture decoding means for decoding the decoding target frame that has been subjected to predictive encoding from the encoded data using the motion compensated prediction picture as a prediction signal.

16. The multiview video decoding apparatus according to claim 15, further comprising a degree of reliability setting means for setting a degree of reliability indicating certainty of the view synthesized picture for each pixel of the view synthesized picture,

wherein the motion vector estimation means assigns a weight to a matching cost of each pixel when the corresponding region is searched for based on the degree of reliability.

17. A motion vector estimation program for causing a computer of a motion vector estimation apparatus to execute:

   a view synthesized picture generation function of generating, from a reference camera video taken by a camera different from a processing camera that has taken a processing picture included in a multiview video, a view synthesized picture at a time when the processing picture has been taken based on the same setting as that of the processing camera; and

   a corresponding region estimation function of estimating a motion vector by searching for a corresponding region in a reference picture taken by the processing camera using a picture signal on the view synthesized picture corresponding to a processing region on the processing picture without using the processing picture.

18. A multiview video encoding program for causing a computer of a multiview video encoding apparatus for performing predictive encoding of a multiview video to execute:

   a view synthesized picture generation function of generating, from an already encoded reference view frame taken simultaneously with an encoding target frame at a reference view different from an encoding target view of the multiview video, a view synthesized picture at the encoding target view;

   a motion vector estimation function of estimating a motion vector by searching for a corresponding region on an already encoded reference frame at the encoding target view for each unit block for encoding of the view synthesized picture;

   a motion compensated prediction picture generation function of generating a motion compensated prediction picture for the encoding target frame using the estimated motion vector and the reference frame; and

   a residual encoding function of encoding a difference signal between the encoding target frame and the motion compensated prediction picture.

19. A multiview video decoding program for causing a computer of a multiview video decoding apparatus for decoding a video for a view of a multiview video from encoded data to execute:

   a view synthesized picture generation function of generating, from a reference view frame taken simultaneously with a decoding target frame at a reference view different from a decoding target view, a view synthesized picture at the decoding target view;

   a motion vector estimation function of estimating a motion vector by searching for a corresponding region on an already decoded reference frame at the decoding target view for each unit block for decoding of the view synthesized picture;
a motion compensated prediction picture generation function of generating a motion compensated prediction picture for the decoding target frame using the estimated motion vector and the reference frame; and
a picture decoding function of decoding the decoding target frame that has been subjected to predictive encoding from the encoded data using the motion compensated prediction picture as a prediction signal.

FIG. 1

MULTIVIEW VIDEO ENCODING APPARATUS 100

- 112 DECODED PICTURE MEMORY
- 111 PREDICTION RESIDUAL DECODING UNIT
- 114
- 108 CORRESPONDING REGION SEARCH UNIT
- 109 MOTION COMPENSATED PREDICTION UNIT
- 110 PREDICTION RESIDUAL ENCODING UNIT
- 106 VIEW SYNTHESIZED PICTURE MEMORY
- 107 DEGREE OF RELIABILITY SETTING UNIT
- 113
- 105 VIEW SYNTHESIS UNIT
- 104 REFERENCE VIEW PICTURE MEMORY
- 103 REFERENCE VIEW FRAME INPUT UNIT
- 101 ENCODING TARGET FRAME INPUT UNIT
- 102 ENCODING TARGET PICTURE MEMORY

FIG. 2

START

INPUT ENCODING TARGET FRAME $Org$
AND REFERENCE VIEW FRAME $Ref_n$ $(n=1, 2, \cdots, N)$ ⌐Sa1

GENERATE VIEW SYNTHESIZED PICTURE $Syn$ ⌐Sa2

SET DEGREE OF RELIABILITY $\rho$ ⌐Sa3

$blk \leftarrow 0$ ⌐Sa4

OBTAIN BLOCK ON $Dec_t$ CORRESPONDING TO $Syn[blk]$ ⌐Sa5

GENERATE PREDICTION SIGNAL $Pred$ ⌐Sa6

ENCODE RESIDUAL SIGNAL $Res$ $(=Org-Pred)$ ⌐Sa7

OBTAIN $DecRes$ BY PERFORMING DECODING
ON ENCODED RESIDUAL SIGNAL ⌐Sa8

GENERATE LOCAL DECODED PICTURE $Dec_{cur}[blk]$ ⌐Sa9

STORE LOCAL DECODED PICTURE
$Dec_{cur}[blk]$ IN DECODED PICTURE MEMORY ⌐Sa10

$blk \leftarrow blk+1$ ⌐Sa11

$blk < numBlks?$ ⌐Sa12    YES

NO

END

FIG. 3

FIG. 4

START

INPUT ENCODING TARGET FRAME *Org* AND
REFERENCE VIEW FRAME $Ref_n$ (*n*=1, 2, ⋯, *N*)  ⌐Sb1

GENERATE VIEW SYNTHESIZED PICTURE *Syn*  ⌐Sb2

*blk*←0  ⌐Sb3

OBTAIN BLOCK ON $Dec_t$ CORRESPONDING TO *Org*[*blk*]  ⌐Sb4

GENERATE PREDICTION SIGNAL *Pred*  ⌐Sb5

ENCODE RESIDUAL SIGNAL *Res* (=*Org*−*Pred*)  ⌐Sb6

OBTAIN *DecRes* BY PERFORMING DECODING
ON ENCODED RESIDUAL SIGNAL  ⌐Sb7

GENERATE LOCAL DECODED PICTURE $Dec_{cur}$[*blk*]  ⌐Sb8

STORE LOCAL DECODED PICTURE
$Dec_{cur}$[*blk*] IN DECODED PICTURE MEMORY  ⌐Sb9

OBTAIN BLOCK ON $Dec_t$ CORRESPONDING TO *Syn*[*blk*]  ⌐Sb10

GENERATE PREDICTION VECTOR  ⌐Sb11

PERFORM PREDICTIVE ENCODING OF MOTION VECTOR  ⌐Sb12

*blk*←*blk*+1  ⌐Sb13

⌐Sb14
*blk*<*numBlks*?  —— YES

NO

END

FIG. 5

EP 2 541 939 A1

# FIG. 6

```
            ┌─────────────┐
            │    START    │
            └─────────────┘
                   │
                   ▼                          ⌐Sc1
┌──────────────────────────────────────────────┐
│            INPUT ENCODED DATA AND              │
│   REFERENCE VIEW FRAME Ref_n  (n=1, 2, ···, N) │
└──────────────────────────────────────────────┘
                   │
                   ▼                          ⌐Sc2
┌──────────────────────────────────────────────┐
│       GENERATE VIEW SYNTHESIZED PICTURE Syn    │
└──────────────────────────────────────────────┘
                   │
                   ▼                          ⌐Sc3
┌──────────────────────────────────────────────┐
│          SET DEGREE OF RELIABILITY ρ           │
└──────────────────────────────────────────────┘
                   │
                   ▼           ⌐Sc4
            ┌─────────────┐
            │   blk←0      │
            └─────────────┘
                   │
                   ▼                          ⌐Sc5
┌──────────────────────────────────────────────┐
│ OBTAIN BLOCK ON Dec_t CORRESPONDING TO Syn[blk]│◄─┐
└──────────────────────────────────────────────┘  │
                   │                               │
                   ▼                          ⌐Sc6 │
┌──────────────────────────────────────────────┐  │
│        GENERATE PREDICTION SIGNAL Pred         │  │
└──────────────────────────────────────────────┘  │
                   │                               │
                   ▼                          ⌐Sc7 │
┌──────────────────────────────────────────────┐  │
│  OBTAIN DECODED PREDICTION RESIDUAL DecRes     │  │
│  BY PERFORMING DECODING ON ENCODED DATA        │  │
└──────────────────────────────────────────────┘  │
                   │                               │
                   ▼                          ⌐Sc8 │
┌──────────────────────────────────────────────┐  │
│    GENERATE, OUTPUT, AND STORE DECODED         │  │
│         PICTURE Dec_cur[blk]                   │  │
└──────────────────────────────────────────────┘  │
                   │                               │
                   ▼           ⌐Sc9                │
            ┌─────────────┐                        │
            │  blk←blk+1   │                        │
            └─────────────┘                        │
                   │           ⌐Sc10               │
                   ▼                               │
            ╱─────────────╲          YES           │
           ╱ blk<numBlks?  ╲─────────────────────┘
            ╲─────────────╱
                   │ NO
                   ▼
            ┌─────────────┐
            │     END     │
            └─────────────┘
```

FIG. 7

400

MULTIVIEW VIDEO DECODING APPARATUS

405 VIEW SYNTHESIZED PICTURE MEMORY

406 CORRESPONDING REGION SEARCH UNIT

404 VIEW SYNTHESIS UNIT

407 PREDICTION VECTOR GENERATION UNIT

412 DECODED PICTURE MEMORY

409 MOTION VECTOR MEMORY

403 REFERENCE VIEW FRAME INPUT UNIT

408 MOTION VECTOR DECODING UNIT

410 MOTION COMPENSATED PREDICTION UNIT

401 ENCODED DATA INPUT UNIT

402 ENCODED DATA MEMORY

411 PICTURE DECODING UNIT

EP 2 541 939 A1

FIG. 8

START

INPUT ENCODED DATA AND REFERENCE
VIEW FRAME $Ref_n$ $(n=1, 2, \cdots, N)$ — Sd1

GENERATE VIEW SYNTHESIZED PICTURE $Syn$ — Sd2

$blk \leftarrow 0$ — Sd3

OBTAIN BLOCK ON $Dec_t$ CORRESPONDING TO $Syn[blk]$ — Sd4

GENERATE PREDICTION VECTOR $pmv$ — Sd5

DECODE/STORE MOTION VECTOR $mv$ SUBJECTED TO
PREDICTIVE ENCODING FROM ENCODED DATA — Sd6

GENERATE PREDICTION SIGNAL $Pred$ — Sd7

OBTAIN DECODED PREDICTION RESIDUAL $DecRes$
BY PERFORMING DECODING ON ENCODED DATA — Sd8

GENERATE, OUTPUT,
AND STORE DECODED PICTURE $Dec_{cur}[blk]$ — Sd9

$blk \leftarrow blk+1$ — Sd10

$blk < numBlks?$ — Sd11

YES

NO

END

FIG. 9

500

MOTION VECTOR ESTIMATION APPARATUS

502
CAMERA INFORMATION
INPUT UNIT

503
VIEW SYNTHESIS
UNIT

504
LOW PASS
FILTER UNIT

501
REFERENCE VIEW
VIDEO INPUT UNIT

505
CORRESPONDING
REGION SEARCH
UNIT

506
MOTION VECTOR
SMOOTHING UNIT

EP 2 541 939 A1

FIG. 10

START

INPUT REFERENCE VIEW FRAMES $Ref(n, t)$
($n$=1, 2, $\cdots$, $N$ AND $t$ = $T1$, $T2$)
AND CAMERA INFORMATION OF PROCESSING
TARGET VIEW AND REFERENCE VIEW — Se1

GENERATE VIEW SYNTHESIZED PICTURE $Syn_t$ — Se2

GENERATE $LPFSyn_t$ BY APPLYING LOW PASS FILTER
TO VIEW SYNTHESIZED PICTURE — Se3

$blk \leftarrow 0$ — Se4

OBTAIN BLOCK ON $LPFSyn_{T1}$
CORRESPONDING TO $LPFSyn_{T2}$ — Se5

$blk \leftarrow blk+1$ — Se6

$blk < numBlks?$ — Se7   YES

NO

SMOOTH SET OF MOTION VECTORS $\{MV_{blk}\}$ — Se8

END

FIG. 11

500a — MOTION VECTOR ESTIMATION APPARATUS

502 — CAMERA INFORMATION INPUT UNIT

503 — VIEW SYNTHESIS UNIT

501 — REFERENCE VIEW VIDEO INPUT UNIT

504 — LOW PASS FILTER UNIT

505 — CORRESPONDING REGION SEARCH UNIT

506 — MOTION VECTOR SMOOTHING UNIT

507 — DEGREE OF RELIABILITY SETTING UNIT

FIG. 12

# FIG. 13

```
                    ┌─────────────┐
                    │    START    │
                    └──────┬──────┘
                           │                    ╭─Sf1
        ┌──────────────────▼──────────────────┐
        │  INPUT ENCODING TARGET FRAME Org AND │
        │     REFERENCE VIEW FRAMES Ref(n, t)  │
        │  (n=1, 2, ···, N AND t= T, T1, T2, ···, Tm) │
        └──────────────────┬──────────────────┘
                           │                    ╭─Sf2
        ┌──────────────────▼──────────────────┐
        │  GENERATE VIEW SYNTHESIZED PICTURE Syn_t │
        └──────────────────┬──────────────────┘
                           │                    ╭─Sf3
        ┌──────────────────▼──────────────────┐
        │  GENERATE LPFSyn_t BY APPLYING LOW PASS │
        │   FILTER TO VIEW SYNTHESIZED PICTURE  │
        └──────────────────┬──────────────────┘
                           │                    ╭─Sf4
        ┌──────────────────▼──────────────────┐
        │      SET DEGREE OF RELIABILITY ρ     │
        └──────────────────┬──────────────────┘
                           │                    ╭─Sf5
        ┌──────────────────▼──────────────────┐
        │ OBTAIN BLOCK ON LPFSyn_t CORRESPONDING TO │
        │    LPFSyn_t[blk] FOR EACH BLOCK blk  │
        └──────────────────┬──────────────────┘
                           │                    ╭─Sf6
        ┌──────────────────▼──────────────────┐
        │ SMOOTH SET OF MOTION VECTORS {MV_blk} │
        └──────────────────┬──────────────────┘
                           │                    ╭─Sf7
        ┌──────────────────▼──────────────────┐
        │      GENERATE MOTION COMPENSATED     │
        │       PREDICTION SIGNAL Pred         │
        └──────────────────┬──────────────────┘
                           │                    ╭─Sf8
        ┌──────────────────▼──────────────────┐
        │  PERFORM PREDICTIVE ENCODING OF Org  │
        │  USING Pred AS PREDICTION SIGNAL     │
        └──────────────────┬──────────────────┘
                           │                    ╭─Sf9
        ┌──────────────────▼──────────────────┐
        │ DECODE DECODED PREDICTION RESIDUAL DecRes │
        └──────────────────┬──────────────────┘
                           │                    ╭─Sf10
        ┌──────────────────▼──────────────────┐
        │ GENERATE LOCAL DECODED PICTURE Dec_cur │
        └──────────────────┬──────────────────┘
                           │
                    ┌──────▼──────┐
                    │     END     │
                    └─────────────┘
```

FIG. 14

MULTIVIEW VIDEO
ENCODING APPARATUS

700

712
CORRESPONDING
REGION SEARCH
UNIT

713
VECTOR
SMOOTHING UNIT

714
PREDICTION VECTOR
GENERATION UNIT

715
VECTOR
INFORMATION
ENCODING UNIT

711
VIEW SYNTHESIZED
PICTURE MEMORY

710
LOW PASS
FILTER UNIT

716
MOTION
VECTOR MEMORY

709
VIEW SYNTHESIS
UNIT

707
DECODED
PICTURE MEMORY

708
REFERENCE VIEW
FRAME INPUT UNIT

703
MOTION
ESTIMATION UNIT

704
MOTION
COMPENSATED
PREDICTION UNIT

706
PICTURE
DECODING UNIT

701
ENCODING TARGET
FRAME INPUT UNIT

702
ENCODING TARGET
PICTURE MEMORY

705
PICTURE
ENCODING UNIT

EP 2 541 939 A1

FIG. 15

START

INPUT ENCODING TARGET FRAME $Org$ — Sg1

OBTAIN BLOCK ON REFERENCE FRAME
CORRESPONDING TO $Org[blk]$ FOR EACH BLOCK $blk$ — Sg2

GENERATE MOTION COMPENSATED
PREDICTION SIGNAL $Pred$ — Sg3

PERFORM PREDICTIVE ENCODING OF $Org$
USING $Pred$ AS PREDICTION SIGNAL — Sg4

GENERATE LOCAL DECODED PICTURE $Dec_{cur}$ — Sg5

INPUT REFERENCE VIEW FRAMES
$Ref(n, t)$ ($n$=1, 2, $\cdots$, $N$ AND $t = T$, $T1$, $T2$, $\cdots$, $Tm$) — Sg6

GENERATE VIEW SYNTHESIZED PICTURE $Syn_t$ — Sg7

GENERATE $LPFSyn_t$ BY APPLYING LOW PASS
FILTER TO VIEW SYNTHESIZED PICTURE — Sg8

OBTAIN BLOCK ON $LPFSyn_t$ CORRESPONDING
TO $LPFSyn_T[blk]$ FOR EACH BLOCK $blk$ — Sg9

SMOOTH SET OF MOTION VECTORS $\{MV_{blk}\}$ — Sg10

GENERATE PREDICTION VECTOR — Sg11

PERFORM PREDICTIVE ENCODING OF MOTION VECTOR — Sg12

END

FIG. 16

MULTIVIEW VIDEO
DECODING APPARATUS

805 — VIEW SYNTHESIS UNIT

806 — LOW PASS FILTER UNIT

804 — REFERENCE VIEW PICTURE MEMORY

808 — DEGREE OF RELIABILITY SETTING UNIT

809 — CORRESPONDING REGION SEARCH UNIT

807 — VIEW SYNTHESIZED PICTURE MEMORY

803 — REFERENCE VIEW FRAME INPUT UNIT

810 — MOTION VECTOR SMOOTHING UNIT

801 — ENCODED DATA INPUT UNIT

811 — MOTION COMPENSATED PREDICTION UNIT

813 — DECODED PICTURE MEMORY

802 — ENCODED DATA MEMORY

812 — PICTURE DECODING UNIT

800

FIG. 17

START

Sh1
INPUT ENCODED DATA AND REFERENCE VIEW FRAMES
$Ref(n, t)$ ($n$=1, 2, $\cdots$, $N$ AND $t$ = $T$, $T1$, $T2$, $\cdots$, $Tm$)

Sh2
GENERATE VIEW SYNTHESIZED PICTURE $Syn_t$

Sh3
GENERATE $LPFSyn_t$ BY APPLYING LOW PASS
FILTER TO VIEW SYNTHESIZED PICTURE

Sh4
SET DEGREE OF RELIABILITY $\rho$

Sh5
OBTAIN BLOCK ON $LPFSyn_t$ CORRESPONDING
TO $LPFSyn_T[blk]$ FOR EACH BLOCK $blk$

Sh6
SMOOTH SET OF MOTION VECTORS $\{MV_{blk}\}$

Sh7
GENERATE MOTION COMPENSATED
PREDICTION SIGNAL $Pred$

Sh8
DECODE DECODED PICTURE $Dec_{cur}$ FROM
ENCODED DATA USING $Pred$
AS PREDICTION SIGNAL ,OUTPUT, AND STORE

END

FIG. 18

MULTIVIEW VIDEO
DECODING APPARATUS

900

905 LOW PASS FILTER UNIT

906 VIEW SYNTHESIZED PICTURE MEMORY

907 CORRESPONDING REGION SEARCH UNIT

908 VECTOR SMOOTHING UNIT

904 VIEW SYNTHESIS UNIT

909 PREDICTION VECTOR GENERATION UNIT

903 REFERENCE VIEW FRAME INPUT UNIT

911 MOTION VECTOR MEMORY

910 MOTION VECTOR DECODING UNIT

912 MOTION COMPENSATED PREDICTION UNIT

914 DECODED PICTURE MEMORY

901 ENCODED DATA INPUT UNIT

902 ENCODED DATA MEMORY

913 PICTURE DECODING UNIT

FIG. 19

```
                    ( START )
                        │
                        ▼                          ⌐Si1
┌──────────────────────────────────────────────────┐
│ INPUT ENCODED DATA AND REFERENCE VIEW FRAMES       │
│ Ref(n, t)  (n=1, 2, ···, N AND t = T, T1, T2, ···, Tm) │
└──────────────────────────────────────────────────┘
                        │                          ⌐Si2
                        ▼
┌──────────────────────────────────────────────────┐
│ GENERATE VIEW SYNTHESIZED PICTURE Syn_t            │
└──────────────────────────────────────────────────┘
                        │                          ⌐Si3
                        ▼
┌──────────────────────────────────────────────────┐
│ GENERATE LPFSyn_t BY APPLYING LOW PASS             │
│ FILTER TO VIEW SYNTHESIZED PICTURE                 │
└──────────────────────────────────────────────────┘
                        │                          ⌐Si4
                        ▼
┌──────────────────────────────────────────────────┐
│ OBTAIN BLOCK ON LPFSyn_t CORRESPONDING             │
│ to LPFSyn_T[blk] FOR EACH BLOCK blk                │
└──────────────────────────────────────────────────┘
                        │                          ⌐Si5
                        ▼
┌──────────────────────────────────────────────────┐
│ SMOOTH SET OF MOTION VECTORS {MV_blk}              │
└──────────────────────────────────────────────────┘
                        │                          ⌐Si6
                        ▼
              ┌──────────────────┐
              │    blk ← 0       │
              └──────────────────┘
                        │                          ⌐Si7
                        ▼                              ◄──┐
┌──────────────────────────────────────────────────┐    │
│ GENERATE PREDICTION VECTOR pmv                     │    │
└──────────────────────────────────────────────────┘    │
                        │                          ⌐Si8  │
                        ▼                                 │
┌──────────────────────────────────────────────────┐    │
│ DECODE/STORE MOTION VECTOR mv SUBJECTED TO         │    │
│ PREDICTIVE ENCODING FROM ENCODED DATA              │    │
└──────────────────────────────────────────────────┘    │
                        │                          ⌐Si9  │
                        ▼                                 │
┌──────────────────────────────────────────────────┐    │
│ GENERATE PREDICTION SIGNAL Pred                    │    │
└──────────────────────────────────────────────────┘    │
                        │                          ⌐Si10 │
                        ▼                                 │
┌──────────────────────────────────────────────────┐    │
│ OBTAIN DECODED PREDICTION RESIDUAL DecRes          │    │
│ BY PERFORMING DECODING ON ENCODED DATA             │    │
└──────────────────────────────────────────────────┘    │
                        │                          ⌐Si11 │
                        ▼                                 │
┌──────────────────────────────────────────────────┐    │
│ GENERATE, OUTPUT,                                  │    │
│ AND STORE DECODED PICTURE Dec_cur[blk]             │    │
└──────────────────────────────────────────────────┘    │
                        │                          ⌐Si12 │
                        ▼                                 │
              ┌──────────────────┐                       │
              │  blk ← blk+1     │                       │
              └──────────────────┘                       │
                        │                          ⌐Si13  │
                        ▼                                 │
             ◇ blk<numBlks? ◇───────────YES──────────────┘
                        │NO
                        ▼
                    ( END )
```

FIG. 20

## INTERNATIONAL SEARCH REPORT

| International application No. |
| --- |
| PCT/JP2011/053516 |

A. CLASSIFICATION OF SUBJECT MATTER
*H04N7/32*(2006.01)i, *H04N13/02*(2006.01)i

According to International Patent Classification (IPC) or to both national classification and IPC

B. FIELDS SEARCHED

Minimum documentation searched (classification system followed by classification symbols)
H04N7/32, H04N13/02

Documentation searched other than minimum documentation to the extent that such documents are included in the fields searched
Jitsuyo Shinan Koho        1922-1996   Jitsuyo Shinan Toroku Koho   1996-2011
Kokai Jitsuyo Shinan Koho   1971-2011   Toroku Jitsuyo Shinan Koho   1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br><br>A | JP 2009-213161 A  (Nippon Telegraph And Telephone Corp.),<br>17 September 2009 (17.09.2009),<br>paragraphs [0118] to [0119], [0156] to [0170]<br>(Family: none) | 1,3,5-7,<br>9-11,13,15,<br>17-19<br>2,4,8,12,14,<br>16 |
| A | JP 2000-232659 A  (Meidensha Corp.),<br>22 August 2000 (22.08.2000),<br>paragraphs [0011] to [0015]<br>(Family: none) | 1-19 |
| A | JP 2008-503973 A  (LG Electronics Inc.),<br>07 February 2008 (07.02.2008),<br>paragraphs [0029] to [0037]<br>& US 2009/0103619 A1     & EP 1772022 A<br>& WO 2006/001653 A1     & KR 10-2005-0122717 A<br>& CN 101023681 A | 1-19 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>16 March, 2011 (16.03.11) | Date of mailing of the international search report<br>29 March, 2011 (29.03.11) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/053516

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2004/114224 A1 (Nippon Telegraph And Telephone Corp.), 29 December 2004 (29.12.2004), paragraphs [0040] to [0051] & JP 4052331 B          & US 2007/0122027 A1 & EP 1646012 A1          & KR 10-2006-0029140 A & CN 1809844 A | 2,4,8,12,14, 16 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010037434 A

### Non-patent literature cited in the description

- Advanced video coding for generic audiovisual services. *Rec. ITU-T H.264,* March 2009
- **S. SHIMIZU ; M. KITAHARA ; H. KIMATA ; K. KAMIKURA ; Y. YASHIMA.** View Scalable Multiview Video Coding Using 3-D Warping with Depth Map. *IEEE Transactions on Circuits and System for Video Technology,* November 2007, vol. 17 (11), 1485-1495
- **Y. MORI ; N. FUKUSHIMA ; T. FUJII ; M. TANIMOTO.** View Generation with 3D Warping Using Depth Information for FTV. *Proceedings of 3DTV-CON2008,* May 2008, 229-232
- **S. YEA ; A. VETRO.** View Synthesis Prediction for Rate-Overhead Reduction in FTV. *Proceedings of 3DTV-CON2008,* May 2008, 145-148
- **J. SUN ; N. ZHENG ; H. SHUM.** Stereo Matching Using Belief Propagation. *IEEE Transactions on Pattern Analysis and Machine Intelligence,* July 2003, vol. 25 (7), 787-800
- **S. SHIMIZU ; Y. TONOMURA ; H. KIMATA ; Y. OHTANI.** Improved View Interpolation Prediction for Side Information in Multiview Distributed Video Coding. *Proceedings of ICDSC2009,* August 2009
- **K. YAMAMOTO ; M. KITAHARA ; H. KIMATA ; T. YENDO ; T. FUJII ; M. TANIMOTO ; S. SHIMIZU ; K. KAMIKURA ; Y. YASHIMA.** Multiview Video Coding Using View Interpolation and Color Correction. *IEEE Transactions on Circuits and System for Video Technology,* November 2007, vol. 17 (11), 1436-1449
- **J. ASCENSO ; C. BRITES ; F. PEREIRA.** Improving frame interpolation with spatial motion smoothing for pixel domain distributed video coding. *5th EURASIP Conference on Speech and Picture Processing, Multimedia Communications and Services,* July 2005
- **S. KAMP ; M. EVERTZ ; M. WIEN.** Decoder side motion vector derivation for inter frame video coding. *ICIP 2008,* October 2008, 1120-1123